# EUROPEAN PATENT APPLICATION

(11) **EP 4 344 273 A1**
(43) Date of publication of application: **27.03.2024**
(21) Application number: 22810603.5
(22) Date of filing: 26.05.2022
(51) Int. Cl.: H04W 8/24

(54) **COMMUNICATION METHOD AND RELATED COMMUNICATION APPARATUS**

(30) Priority: 28.05.2021 CN 202110593724
(71) Applicant: Huawei Technologies Co., Ltd., Longgang Shenzhen, Guangdong 518129 (CN)
(72) Inventor: WANG, Feng, Shenzhen, Guangdong 518129 (CN); ZHANG, Xu, Shenzhen, Guangdong 518129 (CN); QU, Bingyu, Shenzhen, Guangdong 518129 (CN)
(74) Representative: Gill Jennings & Every LLP
(86) International application number: PCT/CN2022/095107
(87) International publication number: WO 2022/247879

(57) **Abstract**

This application discloses a communication method and a communication apparatus. In the method, a terminal device can report a first capability indication to an access network device. The first capability indication can indicate that the terminal device causes no uplink transmission interruption in a band that does not involve uplink radio frequency chain switching in an uplink radio frequency chain switching period, and the uplink radio frequency chain switching is supported between a band in which uplink switching is performed in the uplink radio frequency chain switching period and the band that does not involve the uplink radio frequency chain switching. In other words, when both a band in which uplink radio frequency chain switching is being performed and a band that does not involve the uplink radio frequency chain switching exist in several bands that support the uplink radio frequency chain switching, no uplink transmission interruption is caused in the band that does not involve the uplink radio frequency chain switching. When no uplink interruption is caused in the band that does not involve the uplink radio frequency chain switching, this helps avoid a waste of time-frequency resources.

## Description

This application claims priority to Chinese Patent Application No. 202110593724.1, filed with the China National Intellectual Property Administration on May 28, 2021 and entitled "COMMUNICATION METHOD AND RELATED COMMUNICATION APPARATUS", which is incorporated herein by reference in its entirety.

### TECHNICAL FIELD

Embodiments of this application relate to the communication field, and in particular, to a communication method and a related communication apparatus.

### BACKGROUND

Uplink radio frequency chain switching (UplinkTxSwitch) means that a terminal device switches a radio frequency chain from a carrier to another carrier, to support uplink transmission on the another carrier. A time period in which uplink radio frequency chain switching is performed is referred to as an uplink radio frequency chain switching period, and is also referred to as switching time.

Currently, in a solution of a conventional technology, it is specified that in the foregoing uplink radio frequency chain switching period, the terminal device does not expect to send an uplink signal on a radio frequency chain corresponding to any uplink carrier. Such a solution may cause a waste of time-frequency resources.

### SUMMARY

Embodiments of this application provide a communication method and a related communication apparatus, to avoid a waste of time-frequency resources.

According to a first aspect, this application provides a communication method. The method relates to a terminal device and an access network device. The terminal device sends a first message to the access network device. The first message includes a first capability indication, the first capability indication indicates that the terminal device causes no uplink transmission interruption in a band that does not involve uplink radio frequency chain switching in an uplink radio frequency chain switching period, and the uplink radio frequency chain switching is supported between a band in which uplink switching is performed in the uplink radio frequency chain switching period and the band that does not involve the uplink radio frequency chain switching.

The uplink radio frequency chain switching period may be understood as a time period in which the terminal device performs uplink radio frequency chain switching in two or more bands. In other words, when the terminal device is in the uplink radio frequency chain switching period, it indicates that the terminal device is performing uplink radio frequency chain switching in the at least two bands. In addition, the band that does not involve the uplink radio frequency chain switching refers to a band in which uplink radio frequency chain switching is not performed in the uplink radio frequency chain switching period. However, the following is not excluded: In a band in which uplink radio frequency chain switching is not performed currently, uplink radio frequency chain switching may be performed at a subsequent moment.

In addition, the first message may be a response message in response to a capability enquiry request sent by the access network device to the terminal device, or may be a message actively reported by the terminal device to the access network device. This is not specifically limited in this application.

In this implementation, the terminal device can report the first capability indication to the access network device. The first capability indication can indicate that the terminal device causes no uplink transmission interruption in the band that does not involve the uplink radio frequency chain switching in the uplink radio frequency chain switching period, and the uplink radio frequency chain switching is supported between the band in which uplink switching is performed in the uplink radio frequency chain switching period and the band that does not involve the uplink radio frequency chain switching. In other words, when both a band in which uplink radio frequency chain switching is being performed and a band that does not involve the uplink radio frequency chain switching exist in several bands that support the uplink radio frequency chain switching, no uplink transmission interruption is caused in the band that does not involve the uplink radio frequency chain switching. When no uplink interruption is caused in the band that does not involve the uplink radio frequency chain switching, this helps avoid a waste of time-frequency resources.

In a conventional technology, a terminal device in the conventional technology can support only two bands, and in an uplink radio frequency chain switching period, both the bands involve uplink radio frequency chain switching. However, this application proposes that in the uplink radio frequency chain switching period, the terminal device may further have a band that does not involve the uplink radio frequency chain switching. Therefore, the solution of this application implies that the terminal device supports at least three bands, and uplink radio frequency chain switching can be performed between the at least three bands. That is, uplink radio frequency chain switching can be performed between any two of the at least three bands. Therefore, a case in which in the at least three bands, a part of the bands involves the uplink radio frequency chain switching, and the other part of the bands does not involve the uplink radio frequency chain switching may occur.

In an optional implementation, the first message further includes indication information of at least three bands, and the at least three bands support the uplink radio frequency chain switching.

In this implementation, it is proposed that the terminal device needs to report, to the access network device, bands that support the uplink radio frequency chain switching. Because the terminal device has the band that does not involve the uplink radio frequency chain switching in the uplink radio frequency chain switching period, the terminal device supports the at least three bands, and the at least three bands support the uplink radio frequency chain switching. Therefore, the terminal device reports the at least three bands to the access network device, and indicates that the at least three bands support the uplink radio frequency chain switching. Optionally, the terminal device may place the first capability indication and the indication information of the at least three bands supported by the terminal device in one message (for example, the first message) and send the message to the access network device. It should be understood that, that the terminal device reports a band to the access network device indicates that the terminal device sends, to the access network device by using a message, indication information of the band that needs to be reported. For example, the indication information of the at least three bands that is carried in the first message is an identifier of each of the at least three bands, or a frequency range of each of the at least three bands.

It should be further understood that, that the at least three bands support the uplink radio frequency chain switching may be understood as follows: Uplink radio frequency chain switching can be performed between every two of the at least three bands. However, during actual application, the following is not excluded: Uplink radio frequency chain switching is performed between two of the at least three bands, but in another part of the bands in which radio frequency chain switching can be performed with another band, currently, uplink radio frequency chain switching is not performed.

In addition, this application further provides a plurality of implementations of how to report the at least three bands to the access network device.

In an optional implementation, the first message further includes indication information of an initial band combination, the initial band combination includes the at least three bands, and the initial band combination indicates that the band in the initial band combination supports the uplink radio frequency chain switching.

In this implementation, it is proposed that the terminal device indicates, to the access network device by using a band combination (band collection), bands in which uplink radio frequency chain switching can be performed. It should be understood that, the initial band combination is merely a name listed for ease of description. During actual application, use of another name to represent the foregoing set including a plurality of bands is not excluded. The indication information of the initial band combination may be an identifier of the initial band combination, or may be an identifier of each band in the initial band combination.

In another optional implementation, the terminal device may form at least three band pairs by using the at least three bands. Each band pair includes two of the at least three bands, each band pair indicates that the two bands in the band pair support the switching, and a same band exists between any two of the at least three band pairs. Optionally, indication information of the at least three band pairs is carried in the first message.

In this implementation, it is proposed that the terminal device indicates, to the access network device by using a plurality of band pairs (band pairs), bands in which uplink radio frequency chain switching can be performed.

In addition, this application further provides a plurality of implementations of first capability indications with different indication ranges (or granularities).

In an optional implementation, the first message further includes indication information of a first band combination, the first capability indication corresponds to the first band combination, the first band combination is a subset of a set including the at least three bands (that is, a subset of the initial band combination), and the first capability indication the terminal device causes no uplink transmission interruption in a band in the first band combination in the uplink radio frequency chain switching period when the band in the first band combination does not involve the uplink radio frequency chain switching.

The indication information of the first band combination may be an identifier of the first band combination, or may be an identifier of each band in the first band combination.

In another optional implementation, the first message further includes indication information of a second band combination, and the second band combination is a subset of a set including the at least three bands; and the first capability indication corresponds to a third band, the third band belongs to the first band combination, the third band does not belong to the second band combination, and the first capability indication indicates that the terminal device causes no uplink transmission interruption in the third band when the terminal device performs uplink radio frequency chain switching in a band in the second band combination.

The indication information of the second band combination may be an identifier of the second band combination, or may be an identifier of each band in the second band combination.

In another optional implementation, the first message further includes indication information of a second band combination, and the second band combination is a subset of a set including the at least three bands; and the first capability indication corresponds to a third band, the third band belongs to the first band combination, the third band does not belong to the second band combination, and the first capability indication indicates that no uplink transmission interruption is caused in the third band when at least one band in which uplink radio frequency chain switching is performed belongs to the second band combination.

The indication information of the second band combination may be an identifier of the second band combination, or may be an identifier of each band in the second band combination.

In another optional implementation, the first message further includes indication information of a first carrier set, and a carrier in the first carrier set belongs to a band in the at least three bands; and the first capability indication corresponds to the first carrier set, and the first capability indication indicates that a carrier in the first carrier set supports causing no uplink transmission interruption in the uplink radio frequency chain switching period when the carrier in the first carrier set does not involve the uplink radio frequency chain switching.

The indication information of the first carrier set may be an identifier of the first carrier set, or may be an identifier of each carrier in the first carrier set.

In an optional implementation, after that the terminal device sends a first message to the access network device, the method further includes: In the uplink radio frequency chain switching period, the terminal device causes an uplink transmission interruption in a band in which uplink radio frequency chain switching is performed and a band in a fourth band combination. The band in the fourth band combination is a band that is in the at least three bands and that does not belong to the first band combination.

In addition, this application further provides a communication method. In the communication method, the terminal device and the access network device may further determine, in a pre-agreed manner, whether an uplink transmission interruption is caused in the band that does not involve the uplink radio frequency chain switching in the uplink radio frequency chain switching period.

In a possible implementation, in an uplink radio frequency chain switching period on at least two carriers, the terminal device causes an uplink transmission interruption on the at least two carriers, and causes no uplink transmission interruption on at least one carrier that does not involve the uplink radio frequency chain switching. The at least two carriers and the at least one carrier that does not involve the uplink radio frequency chain switching belong to a second carrier set, and carriers in the second carrier set are carriers configured by the access network device for the uplink radio frequency chain switching. In other words, the terminal device and the access network device may pre-agree that no uplink transmission interruption is caused in a band that does not involve the uplink radio frequency chain switching in the uplink radio frequency chain switching period.

In another possible implementation, in an uplink radio frequency chain switching period on at least two carriers, the terminal device causes an uplink transmission interruption on the at least two carriers, and causes an uplink transmission interruption on at least one carrier that does not involve uplink radio frequency chain switching. The at least two carriers and the at least one carrier that does not involve the uplink radio frequency chain switching belong to a second carrier set, and carriers in the second carrier set are carriers configured by the access network device for the uplink radio frequency chain switching. In other words, the terminal device and the access network device may pre-agree that an uplink transmission interruption is caused in a band that does not involve the uplink radio frequency chain switching in the uplink radio frequency chain switching period.

According to a second aspect, this application provides a communication method. An access network device receives a first message from a terminal device. The first message includes a first capability indication, the first capability indication indicates that the terminal device causes no uplink transmission interruption in a band that does not involve uplink radio frequency chain switching in an uplink radio frequency chain switching period, and the uplink radio frequency chain switching is supported between a band in which uplink switching is performed in the uplink radio frequency chain switching period and the band that does not involve the uplink radio frequency chain switching.

In this implementation, the access network device can receive the reported first capability indication from the terminal device. The first capability indication can indicate that the terminal device causes no uplink transmission interruption in the band that does not involve the uplink radio frequency chain switching in the uplink radio frequency chain switching period, and the uplink radio frequency chain switching is supported between the band in which uplink switching is performed in the uplink radio frequency chain switching period and the band that does not involve the uplink radio frequency chain switching. In other words, when both a band in which uplink radio frequency chain switching is being performed and a band that does not involve the uplink radio frequency chain switching exist in several bands that support the uplink radio frequency chain switching, no uplink transmission interruption is caused in the band that does not involve the uplink radio frequency chain switching. When no uplink interruption is caused in the band that does not involve the uplink radio frequency chain switching, the access network device can still receive uplink data from the band that does not involve the uplink radio frequency chain switching, or the access network device can schedule the band that does not involve the uplink radio frequency chain switching. Therefore, this helps avoid a waste of time-frequency resources.

In an optional implementation, the first message further includes indication information of at least three bands, and the at least three bands support the uplink radio frequency chain switching.

In an optional implementation, the first message further includes indication information of a first band combination, the first capability indication corresponds to the first band combination, the first band combination is a subset of a set including the at least three bands, and the first capability indication the terminal device causes no uplink transmission interruption in a band in the first band combination in the uplink radio frequency chain switching period when the band in the first band combination does not involve the uplink radio frequency chain switching.

In an optional implementation, the first message further includes indication information of a second band combination, and the second band combination is a subset of a set including the at least three bands; and the first capability indication corresponds to a third band, the third band belongs to the first band combination, the third band does not belong to the second band combination, and the first capability indication indicates that the terminal device causes no uplink transmission interruption in the third band when the terminal device performs uplink radio frequency chain switching in a band in the second band combination.

In an optional implementation, the first message further includes indication information of a second band combination, and the second band combination is a subset of a set including the at least three bands; and the first capability indication corresponds to a third band, the third band belongs to the first band combination, the third band does not belong to the second band combination, and the first capability indication indicates that no uplink transmission interruption is caused in the third band when at least one band in which uplink radio frequency chain switching is performed belongs to the second band combination.

In an optional implementation, the first message further includes indication information of a first carrier set, and a carrier in the first carrier set belongs to a band in the at least three bands; and the first capability indication corresponds to the first carrier set, and the first capability indication indicates that a carrier in the first carrier set supports causing no uplink transmission interruption in the uplink radio frequency chain switching period when the carrier in the first carrier set does not involve the uplink radio frequency chain switching.

According to a third aspect, this application provides a communication apparatus. The communication apparatus is the terminal device in the foregoing implementations or a chip in the terminal device, and the communication apparatus includes: a transceiver module, configured to send a first message to an access network device. The first message includes a first capability indication, the first capability indication indicates that the terminal device causes no uplink transmission interruption in a band that does not involve uplink radio frequency chain switching in an uplink radio frequency chain switching period, and the uplink radio frequency chain switching is supported between a band in which uplink switching is performed in the uplink radio frequency chain switching period and the band that does not involve the uplink radio frequency chain switching.

In an optional implementation, the first message further includes indication information of at least three bands, and the at least three bands support the uplink radio frequency chain switching.

In an optional implementation, the first message further includes indication information of a first band combination, the first capability indication corresponds to the first band combination, the first band combination is a subset of a set including the at least three bands, and the first capability indication the terminal device causes no uplink transmission interruption in a band in the first band combination in the uplink radio frequency chain switching period when the band in the first band combination does not involve the uplink radio frequency chain switching.

In an optional implementation, the first message further includes indication information of a second band combination, and the second band combination is a subset of a set including the at least three bands; and
the first capability indication corresponds to a third band, the third band belongs to the first band combination, the third band does not belong to the second band combination, and the first capability indication indicates that the terminal device causes no uplink transmission interruption in the third band when the terminal device performs uplink radio frequency chain switching in a band in the second band combination.

In an optional implementation, the first message further includes indication information of a second band combination, and the second band combination is a subset of a set including the at least three bands; and the first capability indication corresponds to a third band, the third band belongs to the first band combination, the third band does not belong to the second band combination, and the first capability indication indicates that no uplink transmission interruption is caused in the third band when at least one band in which uplink radio frequency chain switching is performed belongs to the second band combination.

In an optional implementation, the first message further includes indication information of a first carrier set, and a carrier in the first carrier set belongs to a band in the at least three bands; and the first capability indication corresponds to the first carrier set, and the first capability indication indicates that a carrier in the first carrier set supports causing no uplink transmission interruption in the uplink radio frequency chain switching period when the carrier in the first carrier set does not involve the uplink radio frequency chain switching.

In an optional implementation, the communication apparatus further includes a processing module, configured to: in the uplink radio frequency chain switching period, cause an uplink transmission interruption in a band in which uplink radio frequency chain switching is performed and a band in a fourth band combination. The band in the fourth band combination is a band that is in the at least three bands and that does not belong to the first band combination.

According to a fourth aspect, this application provides a communication apparatus. The communication apparatus is the access network device in the foregoing implementations or a chip in the access network device, and the communication apparatus includes: a transceiver module, configured to send a first message to an access network device. The first message includes a first capability indication, the first capability indication indicates that the terminal device causes no uplink transmission interruption in a band that does not involve uplink radio frequency chain switching in an uplink radio frequency chain switching period, and the uplink radio frequency chain switching is supported between a band in which uplink switching is performed in the uplink radio frequency chain switching period and the band that does not involve the uplink radio frequency chain switching.

In an optional implementation, the first message further includes indication information of at least three bands, and the at least three bands support the uplink radio frequency chain switching.

In an optional implementation, the first message further includes indication information of a first band combination, the first capability indication corresponds to the first band combination, the first band combination is a subset of a set including the at least three bands, and the first capability indication the terminal device causes no uplink transmission interruption in a band in the first band combination in the uplink radio frequency chain switching period when the band in the first band combination does not involve the uplink radio frequency chain switching.

In an optional implementation, the first message further includes indication information of a second band combination, and the second band combination is a subset of a set including the at least three bands; and
the first capability indication corresponds to a third band, the third band belongs to the first band combination, the third band does not belong to the second band combination, and the first capability indication indicates that the terminal device causes no uplink transmission interruption in the third band when the terminal device performs uplink radio frequency chain switching in a band in the second band combination.

In an optional implementation, the first message further includes indication information of a second band combination, and the second band combination is a subset of a set including the at least three bands; and
the first capability indication corresponds to a third band, the third band belongs to the first band combination, the third band does not belong to the second band combination, and the first capability indication indicates that no uplink transmission interruption is caused in the third band when at least one band in which uplink radio frequency chain switching is performed belongs to the second band combination.

In an optional implementation, the first message further includes indication information of a first carrier set, and a carrier in the first carrier set belongs to a band in the at least three bands; and
the first capability indication corresponds to the first carrier set, and the first capability indication indicates that a carrier in the first carrier set supports causing no uplink transmission interruption in the uplink radio frequency chain switching period when the carrier in the first carrier set does not involve the uplink radio frequency chain switching.

In an optional implementation, the communication apparatus further includes a processing module, configured to: in the uplink radio frequency chain switching period, cause an uplink transmission interruption in a band in which uplink radio frequency chain switching is performed and a band in a fourth band combination. The band in the fourth band combination is a band that is in the at least three bands and that does not belong to the first band combination.

In the foregoing implementation, the first capability indication indicates that the terminal device supports a first capability, that is, indicates that the terminal device causes no uplink transmission interruption in the band that does not involve the uplink radio frequency chain switching in the uplink radio frequency chain switching period. However, during actual application, the first capability indication may be represented as an option, that is, the first capability indication indicates whether the first capability is supported. Therefore, in addition to the implementations of the foregoing aspects, this application further provides the following several implementations for the terminal device.

According to a fifth aspect, this application provides a communication method. In the method, a terminal device receives a capability enquiry request from an access network device; and the terminal device sends a first message to the access network device. The first message includes a first capability indication, the first capability indication indicates whether the terminal device causes an uplink transmission interruption in a band that does not involve uplink radio frequency chain switching in an uplink radio frequency chain switching period, and the uplink radio frequency chain switching is supported between a band in which uplink switching is performed in the uplink radio frequency chain switching period and the band that does not involve the uplink radio frequency chain switching.

In this embodiment, the terminal device can report the first capability indication to the access network device. The first capability indication can indicate whether the terminal device causes an uplink transmission interruption in the band that does not involve the uplink radio frequency chain switching in the uplink radio frequency chain switching period, and the uplink radio frequency chain switching is supported between the band in which uplink switching is performed in the uplink radio frequency chain switching period and the band that does not involve the uplink radio frequency chain switching. In other words, the terminal device reports, to the access network device, both a band in which uplink radio frequency chain switching is being performed and a band that does not involve the uplink radio frequency chain switching exist in several bands supported by the terminal device for the uplink radio frequency chain switching, and whether an uplink interruption is required in the band that does not involve the uplink radio frequency chain switching. When no uplink interruption is caused in the band that does not involve the uplink radio frequency chain switching, this helps avoid a waste of time-frequency resources.

In an optional implementation, in the uplink radio frequency chain switching period, a radio frequency chain exists in the band that does not involve the uplink radio frequency chain switching.

In an optional implementation, the first message further includes indication information of at least three bands, and the at least three bands support the uplink radio frequency chain switching.

In an optional implementation, the first message further includes indication information of a first band combination, the first band combination includes the at least three bands, and the first band combination indicates that the band in the first band combination supports the uplink radio frequency chain switching.

In an optional implementation, the at least three bands in the first message form at least three band pairs, and the first message includes indication information of the at least three band pairs. Each band pair includes two of the at least three bands, each band pair indicates that the two bands in the band pair support the switching, and a same band exists between any two of the at least three band pairs.

In an optional implementation, each of the at least three bands corresponds to one first capability indication, each first capability indication indicates whether the corresponding band supports a first capability, and the first capability is that in the uplink radio frequency chain switching period, the terminal device supports causing no uplink transmission interruption in a band that does not involve the switching.

In an optional implementation, each of the at least three bands corresponds to one first capability indication, each band includes at least one carrier, each first capability indication indicates whether all carriers in the corresponding band support a first capability, and the first capability is that in the uplink radio frequency chain switching period, the terminal device supports causing no uplink transmission interruption in a band that does not involve the switching.

In an optional implementation, at least two of the at least three bands correspond to one first capability indication, each first capability indication indicates whether the at least two corresponding bands support a first capability, and the first capability is that in the uplink radio frequency chain switching period, the terminal device supports causing no uplink transmission interruption in a band that does not involve the switching.

In an optional implementation, each of the at least three bands includes at least one carrier, the first message includes one first capability indication, the first capability indication indicates whether each carrier in the at least three bands in the first message supports a first capability, and the first capability is that in the uplink radio frequency chain switching period, the terminal device supports causing no uplink transmission interruption on a carrier that does not involve the switching.

In an optional implementation, each of the at least three bands includes at least one carrier, each carrier in the first message corresponds to one first capability indication, each first capability indication indicates whether the corresponding carrier supports a first capability, and the first capability is that in the uplink radio frequency chain switching period, when the carrier does not involve the switching, the terminal device supports causing no uplink transmission interruption on the carrier.

In an optional implementation, after that the terminal device sends a first message to the access network device, the method further includes:

In the uplink radio frequency chain switching period, the terminal device causes an uplink transmission interruption in a band in which uplink radio frequency chain switching is performed and a band in a fourth band combination. The band in the fourth band combination is a band that is in the at least three bands and that does not belong to the first band combination.

In an optional implementation, after that the terminal device sends a first message to the access network device, the method further includes:

In the uplink radio frequency chain switching period, the terminal device causes an uplink transmission interruption in a band in which uplink radio frequency chain switching is performed and a band in a fifth band combination. The band in the fifth band combination is a band other than a third band in the at least three bands.

According to a sixth aspect, this application provides a communication method. In the method, an access network device sends a capability enquiry request to a terminal device; and the access network device receives a first message from the terminal device. The first message includes a first capability indication, and the first capability indication indicates whether the terminal device causes an uplink transmission interruption in a band that does not involve uplink radio frequency chain switching in an uplink radio frequency chain switching period. The uplink radio frequency chain switching is supported between a band in which uplink switching is performed in the uplink radio frequency chain switching period and the band that does not involve the uplink radio frequency chain switching.

In an optional implementation, in the uplink radio frequency chain switching period, a radio frequency chain exists in the band that does not involve the uplink radio frequency chain switching.

In an optional implementation, the first message further includes indication information of at least three bands, and the at least three bands support the uplink radio frequency chain switching.

In an optional implementation, the first message further includes indication information of a first band combination, the first band combination includes the at least three bands, and the first band combination indicates that the band in the first band combination supports the uplink radio frequency chain switching.

In an optional implementation, the at least three bands in the first message form at least three band pairs, and the first message includes indication information of the at least three band pairs. Each band pair includes two of the at least three bands, each band pair indicates that the two bands in the band pair support the switching, and a same band exists between any two of the at least three band pairs.

In an optional implementation, each of the at least three bands corresponds to one first capability indication, each first capability indication indicates whether the corresponding band supports a first capability, and the first capability is that in the uplink radio frequency chain switching period, the terminal device supports causing no uplink transmission interruption in a band that does not involve the switching.

In an optional implementation, each of the at least three bands corresponds to one first capability indication, each band includes at least one carrier, each first capability indication indicates whether all carriers in the corresponding band support a first capability, and the first capability is that in the uplink radio frequency chain switching period, the terminal device supports causing no uplink transmission interruption in a band that does not involve the switching.

In an optional implementation, at least two of the at least three bands correspond to one first capability indication, each first capability indication indicates whether the at least two corresponding bands support a first capability, and the first capability is that in the uplink radio frequency chain switching period, the terminal device supports causing no uplink transmission interruption in a band that does not involve the switching.

In an optional implementation, each of the at least three bands includes at least one carrier, the first message includes one first capability indication, the first capability indication indicates whether each carrier in the at least three bands in the first message supports a first capability, and the first capability is that in the uplink radio frequency chain switching period, the terminal device supports causing no uplink transmission interruption on a carrier that does not involve the switching.

In an optional implementation, each of the at least three bands includes at least one carrier, each carrier in the first message corresponds to one first capability indication, each first capability indication indicates whether the corresponding carrier supports a first capability, and the first capability is that in the uplink radio frequency chain switching period, when the carrier does not involve the switching, the terminal device supports causing no uplink transmission interruption on the carrier.

According to a seventh aspect, an embodiment of this application provides a communication apparatus. The communication apparatus may be the terminal device in the foregoing implementations, or may be a chip in the terminal device. The communication apparatus may include a processing module and a transceiver module. When the communication apparatus is the terminal device, the processing module may be a processor, and the transceiver module may be a transceiver. The terminal device may further include a storage module, and the storage module may be a memory. The storage module is configured to store instructions, and the processing module executes the instructions stored in the storage module, to enable the terminal device to perform the method according to any one of the first aspect or the implementations of the first aspect, and perform the method according to any one of the fifth aspect or the implementations of the fifth aspect. When the communication apparatus is the chip in the terminal device, the processing module may be a processor, and the transceiver module may be an input/output interface, a pin, a circuit, or the like. The processing module executes instructions stored in a storage module, to enable the terminal device to perform the method according to any one of the first aspect or the implementations of the first aspect, and perform the method according to any one of the fifth aspect or the implementations of the fifth aspect. The storage module may be a storage module (for example, a register or a cache) in the chip, or may be a storage module (for example, a read-only memory or a random access memory) that is in the terminal device and that is located outside the chip.

According to an eighth aspect, an embodiment of this application provides a communication apparatus. The communication apparatus may be the network device (for example, the access network device) in the foregoing implementations, or may be a chip in the network device (for example, a chip in the access network device). The communication apparatus may include a processing module and a transceiver module. When the communication apparatus is the network device, the processing module may be a processor, and the transceiver module may be a transceiver. The network device may further include a storage module, and the storage module may be a memory. The storage module is configured to store instructions, and the processing module executes the instructions stored in the storage module, to enable the network device to perform the method according to any one of the second aspect or the implementations of the second aspect, and perform the method according to any one of the sixth aspect or the implementations of the sixth aspect. When the communication apparatus is the chip in the network device, the processing module may be a processor, and the transceiver module may be an input/output interface, a pin, a circuit, or the like. The processing module executes instructions stored in a storage module, to enable the network device to perform the method according to any one of the second aspect or the implementations of the second aspect, and perform the method according to any one of the sixth aspect or the implementations of the sixth aspect. The storage module may be a storage module (for example, a register or a cache) in the chip, or may be a storage module (for example, a read-only memory or a random access memory) that is in the network device and that is located outside the chip.

According to a ninth aspect, this application provides a communication apparatus. The apparatus may be an integrated circuit chip. The integrated circuit chip includes a processor. The processor is coupled to a memory. The memory is configured to store a program or instructions. When the program or the instructions are executed by the processor, the communication apparatus is enabled to perform the method according to any one of the first aspect or the implementations of the first aspect, and perform the method according to any one of the fifth aspect or the implementations of the fifth aspect.

According to a tenth aspect, this application provides a communication apparatus. The apparatus may be an integrated circuit chip. The integrated circuit chip includes a processor. The processor is coupled to a memory. The memory is configured to store a program or instructions. When the program or the instructions are executed by the processor, the communication apparatus is enabled to perform the method according to any one of the second aspect or the implementations of the second aspect, and perform the method according to any one of the sixth aspect or the implementations of the sixth aspect.

According to an eleventh aspect, an embodiment of this application provides a computer program product including instructions. When the computer program product runs on a computer, the computer is enabled to perform the method described in any one of the first aspect, the second aspect, the fifth aspect, the sixth aspect, or the implementations of the foregoing aspects.

According to a twelfth aspect, an embodiment of this application provides a computer-readable storage medium, including instructions. When the instructions are run on a computer, the computer is enabled to perform the method described in any one of the first aspect, the second aspect, the fifth aspect, the sixth aspect, or the implementations of the foregoing aspects.

According to a thirteenth aspect, an embodiment of this application provides a communication system. The communication system includes the terminal device according to any one of the first aspect and the implementations of the first aspect, and the network device according to any one of the second aspect and the implementations of the second aspect; or the communication system includes the terminal device according to any one of the fifth aspect and the implementations of the fifth aspect, and the network device according to any one of the sixth aspect and the implementations of the sixth aspect.

It can be learned from the foregoing technical solutions that embodiments of this application have the following advantage:

In this application, the terminal device can report the first capability indication to the access network device. The first capability indication can indicate that the terminal device causes no uplink transmission interruption in the band that does not involve the uplink radio frequency chain switching in the uplink radio frequency chain switching period, and the uplink radio frequency chain switching is supported between the band in which uplink switching is performed in the uplink radio frequency chain switching period and the band that does not involve the uplink radio frequency chain switching. In other words, when both the band in which uplink radio frequency chain switching is being performed and the band that does not involve the uplink radio frequency chain switching exist in the several bands that support the uplink radio frequency chain switching, no uplink transmission interruption is caused in the band that does not involve the uplink radio frequency chain switching. When no uplink interruption is caused in the band that does not involve the uplink radio frequency chain switching, this helps avoid a waste of time-frequency resources.

### BRIEF DESCRIPTION OF DRAWINGS

To describe the technical solutions of embodiments of this application more clearly, the following briefly describes the accompanying drawings for describing embodiments. It is clear that the accompanying drawings in the following descriptions show merely a part of embodiments of this application.
FIG. 1 is an example diagram of an uplink radio frequency chain switching scenario in a conventional technology;
FIG. 2 is an example diagram of an uplink radio frequency chain switching scenario according to this application;
FIG. 3 is a schematic diagram of an embodiment of an uplink transmission capability determining method according to this application;
FIG. 4 is a schematic diagram of another embodiment of an uplink transmission capability determining method according to this application;
FIG. 5 is a schematic diagram of an embodiment of a communication apparatus according to this application;
FIG. 6 is a schematic diagram of another embodiment of a communication apparatus according to this application;
FIG. 7 is a schematic diagram of another embodiment of a communication apparatus according to this application; and
FIG. 8 is a schematic diagram of another embodiment of a communication apparatus according to this application.

### DESCRIPTION OF EMBODIMENTS

The following clearly and completely describes the technical solutions of embodiments of this application with reference to the accompanying drawings in embodiments of this application. It is clear that the described embodiments are merely a part but not all of embodiments of this application.

In the specification, the claims, and the accompanying drawings of this application, the terms "first", "second", "third", "fourth", and the like (if existent) are intended to distinguish between similar objects but do not necessarily indicate a specific order or sequence. It should be understood that the terms used in such a way are interchangeable in appropriate circumstances so that embodiments described herein can be implemented in other orders than the order illustrated or described herein. In addition, the terms "include" and "have" and any other variants are intended to cover a non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

For ease of understanding, the following first explains a part of technical terms in embodiments of this application.

Carrier aggregation (carrier aggregation, CA) is to aggregate at least two component carriers (component carriers, CCs) (also referred to as carrier units) to support a larger transmission bandwidth. A cell corresponding to a primary component carrier (primary component carrier, PCC) is a primary cell (primary cell, PCell), and the primary cell is a cell in which a terminal device establishes an initial connection, or a cell in which a radio resource control (radio resource control, RRC) connection is reestablished, or a cell specified in a handover (handover) process. The PCell is responsible for RRC communication with UE. A cell corresponding to a secondary component carrier (secondary component carrier, SCC) is a secondary cell (secondary cell, SCell), and the secondary cell is added/modified/released during RRC connection reconfiguration, and is used to provide an additional radio resource.

A transmission channel (transmitter, TX) is a physical concept, and may also be referred to as a radio frequency (radio frequency, RF) transmission channel or a radio frequency chain (radio frequency chain, RF Chain). In this application, the transmission channel may operate in the following manner, but is not limited to the following manner: The transmission channel may be used to receive a baseband signal from a baseband chip, perform radio frequency processing (such as up-conversion, amplification, and filtering) on the baseband signal to obtain a radio frequency signal, and finally radiate the radio frequency signal to space through an antenna. Specifically, the transmission channel may include electronic components such as an antenna switch, an antenna tuner, a low noise amplifier (low noise amplifier, LNA), a power amplifier (power amplifier, PA), a frequency mixer (mixer), a local oscillator (local oscillator, LO), and a filter (filter). These electronic components may be integrated into one or more chips according to a requirement. The antenna may also be sometimes considered as a part of the transmission channel. In this application, the electronic components are all referred to as radio frequency chains for short. Optionally, the radio frequency chain in this application may also be replaced with Tx, an antenna, a radio frequency, a transmission channel, a transmit port, a quantity of radio frequency chains, a quantity of transport layers, a maximum quantity of transport layers, a maximum quantity of layers supported for transmission, a reception channel, or any combination thereof. Optionally, radio frequency chain switching in this application may be replaced with uplink radio frequency chain switching, or may be replaced with dynamic uplink radio frequency chain switching. Optionally, in this application, a radio frequency chain state of a terminal device may be replaced with an operation state of the terminal device.

A band (band) originally refers to a frequency range of electromagnetic waves, and refers to an electromagnetic wave band that can be used for communication in the communication field. Usually, one band includes one or more carriers (carriers). In this application, a terminal device reports one or more bands to an access network device. The access network device selects one or more carriers from the one or more bands and configures the one or more carriers for the terminal device. The terminal device performs communication by using the carrier configured by the access network device.

A band pair (band pair) is a combination of two bands in which radio frequency chain switching can be performed. Usually, one band pair includes two bands, indicating that uplink radio frequency chain switching can be performed in the two bands. For example, if the band pair is {A, B}, it indicates that the band pair includes two bands: a band A and a band B, and uplink radio frequency chain switching can be performed in the band A and the band B. In other words, an uplink radio frequency chain may be switched from the band A to the band B, and an uplink radio frequency chain may be switched from the band B to the band A.

The following describes a system architecture and an application scenario to which an uplink transmission capability determining method provided in this application is applicable.

A communication method provided in this application may be applied to a fourth generation mobile information technology (4th generation mobile communication technology, 4G) system, may be applied to a fifth generation mobile information technology (5th generation mobile communication technology, 5G) system, or may be applied to a subsequent evolved standard. This is not limited in this application.

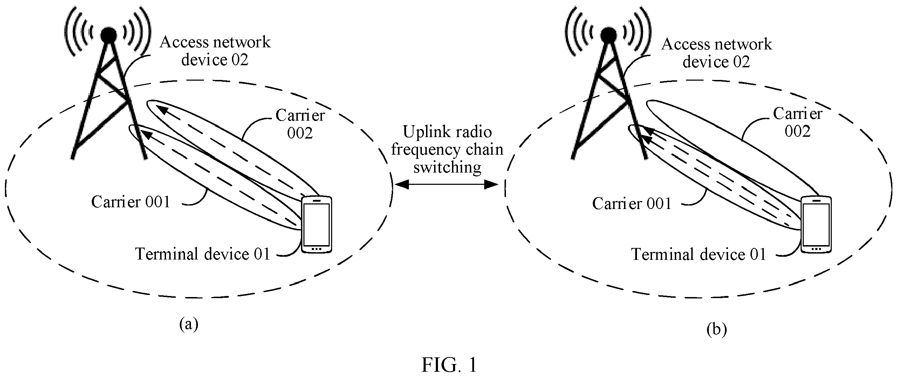

FIG. 1 shows an uplink radio frequency chain switching scenario in a conventional technology. In this scenario, a terminal device 01 supports two uplink carriers (uplink carriers, UL carriers) (for example, a carrier 001 and a carrier 002), and the terminal device 01 can perform uplink radio frequency chain switching on the two uplink carriers. In other words, when the terminal device 01 sends an uplink signal by using the uplink carrier, the terminal device 01 may switch from one radio frequency chain state to another radio frequency chain state. For example, a radio frequency chain state is that the terminal device 01 has one radio frequency chain on one uplink carrier, and also has one radio frequency chain on the other uplink carrier. For example, in Example (a) in FIG. 1, the terminal device 01 has one radio frequency chain on the carrier 001 for sending, and has another radio frequency chain on the carrier 002 for sending. Another radio frequency chain state is that the terminal device 01 has two radio frequency chains on one uplink carrier for sending, and has no radio frequency chain on the other uplink carrier for sending. For example, in Example (b) in FIG. 1, two radio frequency chains on the carrier 001 may be used for sending, and there is no radio frequency chain on the carrier 002 for sending. In other words, a process of switching from Example (a) in FIG. 1 to Example (b) in FIG. 1, or switching from Example (b) in FIG. 1 to Example (a) in FIG. 1 is a common example of uplink radio frequency chain switching. In the conventional technology, in the foregoing uplink radio frequency chain switching process, the terminal device 01 does not expect to perform uplink transmission on either of the two uplink carriers. That is, the terminal device 01 causes an uplink transmission interruption on both the uplink carriers.

With development of communication technologies, the terminal device may support three or more uplink carriers, and uplink radio frequency chain switching can be performed on the at least three uplink carriers. The at least three uplink carriers supported by the terminal device may be carriers in a supplementary uplink (supplementary uplink, SUL) scenario. For example, the at least three uplink carriers include one normal uplink carrier (normal uplink carrier, NUL carrier) (for example, a primary uplink carrier (primary uplink carrier, primary UL carrier)) and at least one supplementary uplink carrier (supplementary uplink carrier, SUL carrier). The at least three uplink carriers supported by the terminal device may alternatively be carriers in a carrier aggregation (carrier aggregation, CA) scenario, for example, one primary carrier (primary component carrier, PCC) and at least one secondary carrier (secondary component carrier, SCC). This is not specifically limited herein. In addition, that the uplink radio frequency chain switching is supported on the at least three uplink carriers may be understood as follows: Radio frequency chain switching can be implemented between every two of the at least three uplink carriers. For example, if the terminal device supports the uplink radio frequency chain switching on a carrier A, a carrier B, and a carrier C, the terminal device may perform uplink radio frequency chain switching between the carrier A and the carrier B, may perform uplink radio frequency chain switching between the carrier A and the carrier C, and may perform uplink radio frequency chain switching between the carrier B and the carrier C. Optionally, that the uplink radio frequency chain switching is supported on the at least three uplink carriers may also be understood as follows: Radio frequency chain switching may be implemented between at least two of the at least three uplink carriers, and the at least two of the at least three uplink carriers may share a radio frequency chain. For example, if the terminal device supports the uplink radio frequency chain switching on a carrier A, a carrier B, and a carrier C, the terminal device may perform uplink radio frequency chain switching between the carrier A and the carrier B, may perform uplink radio frequency chain switching between the carrier A and the carrier C, and may share a radio frequency chain between the carrier B and the carrier C. That the at least two carriers share a radio frequency chain may be understood as follows: If a radio frequency chain operates on one of the at least two carriers, the radio frequency chain is available on the at least two carriers at the same time. If the terminal device supports the uplink radio frequency chain switching in at least one band, an access network device may configure at least two carriers included in the at least one band for the terminal device to perform uplink radio frequency chain switching. The at least two carriers may belong to a same band, or may belong to different bands, or may partially belong to a same band. This specifically depends on a configuration of the access network device and a quantity of carriers supported by the terminal device in the at least one band.

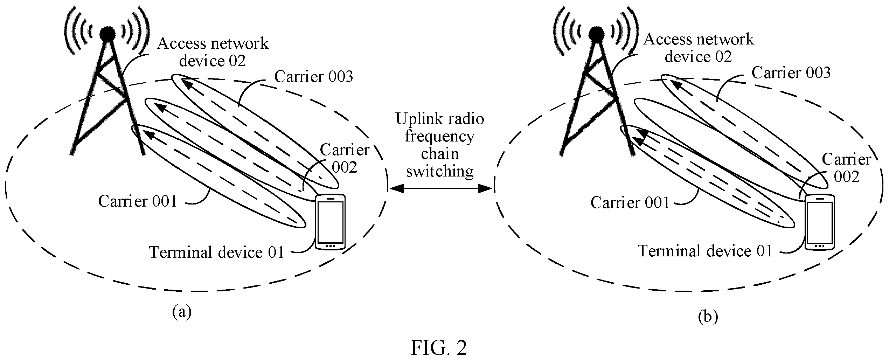

For ease of understanding, using FIG. 2 as an example, the terminal device 01 may switch from a state of having one radio frequency chain on each of three uplink carriers to a state of having radio frequency chains only on two uplink carriers. For example, at a moment, a radio frequency chain state of the terminal device 01 is shown in Example (a) in FIG. 2. To be specific, the terminal device 01 has one radio frequency chain on each of the carrier 001, the carrier 002, and a carrier 003. At a next moment, a radio frequency chain state of the terminal device 01 is shown in Example (b) in FIG. 2. To be specific, the terminal device 01 has two radio frequency chains on the carrier 001, has one radio frequency chain on the carrier 003, and has no radio frequency chain on the carrier 002. In the foregoing radio frequency chain switching process, the carrier 003 does not involve the radio frequency chain switching. In this case, if uplink radio frequency chain switching is performed between the carrier 001 and the carrier 002, uplink transmission on the carrier 003 is directly interrupted. Such a solution is not conducive to effective utilization of time-frequency resources.

In this case, this application proposes that the terminal device 01 reports some information to an access network device 02, to negotiate whether to interrupt uplink transmission on a carrier that does not involve the uplink radio frequency chain switching in an uplink radio frequency chain switching period, or the terminal device 01 and the access network device 02 pre-agree on whether to interrupt uplink transmission on a carrier that does not involve the uplink radio frequency chain switching in an uplink radio frequency chain switching period, to improve utilization of a part of time-frequency resources.

It should be noted that, in the scenario corresponding to FIG. 2, not all cases of performing uplink radio frequency chain switching on the at least three uplink carriers are enumerated. In other words, in addition to the radio frequency chain switching between Example (a) in FIG. 2 and Example (b) in FIG. 2, there are other cases in which a part of carriers involves the uplink radio frequency chain switching but a part of the carriers does not involve the uplink radio frequency chain switching. Specific examples are not listed one by one in this application.

It should be noted that the terminal device in this application includes a device that provides voice and/or data connectivity for a user. For example, the terminal device may include a handheld device having a wireless connection function, or a processing device connected to a wireless modem. The terminal device may communicate with a core network (for example, a 4G core network (evolved packet core, EPC) or a 5G core network (5th generation core, 5GC)) by using a radio access network (radio access network, RAN), and may exchange a voice and/or data with the RAN. The terminal device may include user equipment (user equipment, UE), a wireless terminal device, a mobile terminal device, a subscriber unit (subscriber unit), a subscriber station (subscriber station), a mobile station (mobile station), a mobile console (mobile), a remote station (remote station), an access point (access point, AP), a remote terminal device (remote terminal), an access terminal device (access terminal), a user terminal device (user terminal), a user agent (user agent), a user device (user device), or the like. In addition, the terminal device may alternatively be a vehicle-mounted terminal, for example, a telematics box (telematics box, T-Box), a domain controller (domain controller, DC), a multi domain controller (multi domain controller, MDC), or an on board unit (on board unit, OBU) that is integrated into a vehicle. The terminal device may alternatively be a wearable device, for example, glasses, gloves, a watch, clothes, shoes, or another portable device that can be directly worn on a body or integrated into clothes or accessories of a user. This is not specifically limited in this application.

It should be understood that the terminal device in embodiments of this application may be any one of the foregoing devices or a chip. This is not specifically limited herein. Regardless of whether the terminal device is a device or a chip, the terminal device can be manufactured, sold, or used as an independent product. In this embodiment and subsequent embodiments, only the terminal device is used as an example for description.

In addition, the access network device in this application is an access network RAN device that currently provides a service for the terminal device, and may be a 4G radio access network device, or may be a device that communicates with a wireless terminal device over an air interface in a 4G access network by using one or more cells. For example, the access network device may be an LTE base station, and may also be referred to as an evolved NodeB (evolved NodeB, NodeB, eNB, or e-NodeB) in a long term evolution LTE system or an LTE advanced (long term evolution advanced, LTE-A) system. In addition, the access network device may include a next generation NodeB (next generation NodeB, gNB) in a fifth generation mobile communication technology (fifth generation, 5G) new radio (new radio, NR) system, or may include a central unit (central unit, CU) and a distributed unit (distributed unit, DU) in a cloud access network (CloudRAN) system. This is not limited in embodiments of this application. The access network device may be configured to mutually convert a received over-the-air frame and an internet protocol (internet protocol, IP) packet, and serve as a router between the terminal device and a remaining part of the access network. The remaining part of the access network may include an IP network. The network device may further coordinate attribute management of the air interface.

It should be understood that the access network device in embodiments of this application may be any one of the foregoing devices or a chip in the foregoing devices. This is not specifically limited herein. Regardless of whether the access network device is a device or a chip, the access network device can be manufactured, sold, or used as an independent product. In this embodiment and subsequent embodiments, only the access network device is used as an example for description.

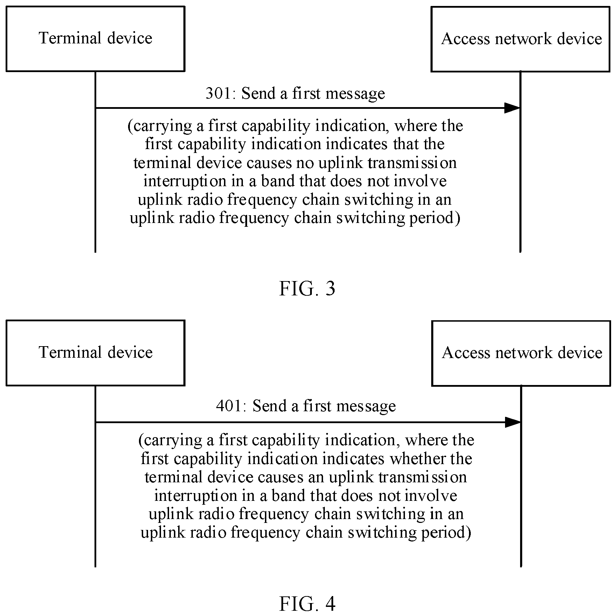

With reference to FIG. 3, the following describes a main procedure of the uplink transmission capability determining method provided in this application. In the method, a terminal device and an access network device mainly perform the following steps.

Step 301: The terminal device sends a first message to the access network device. Correspondingly, the access network device receives the first message from the terminal device. The first message carries a first capability indication, and the first capability indication indicates that the terminal device causes no uplink transmission interruption in a band that does not involve uplink radio frequency chain switching in an uplink radio frequency chain switching period.

The uplink radio frequency chain switching period may be understood as a time period in which the terminal device performs uplink radio frequency chain switching in two or more bands. In other words, when the terminal device is in the uplink radio frequency chain switching period, it indicates that the terminal device is performing uplink radio frequency chain switching in the at least two bands. Particularly, one band includes one or more carriers, and uplink radio frequency chain switching may also be performed between two carriers in a same band. Therefore, the foregoing uplink radio frequency chain switching period may also be understood as time in which the terminal device performs radio frequency chain switching on at least two carriers. The at least two carriers may belong to a same band. Each of the at least two carriers may alternatively belong to a different band. Apart of the at least two carriers may belong to a same band, and a part of the carriers may belong to different bands. This is not specifically limited herein.

In addition, the band that does not involve the uplink radio frequency chain switching refers to a band in which uplink radio frequency chain switching is not performed in the foregoing uplink radio frequency chain switching period. However, the following is not excluded: In a band in which uplink radio frequency chain switching is not performed currently, uplink radio frequency chain switching may be performed at a subsequent moment. It should be noted that, both the band in which uplink switching is performed in the uplink radio frequency chain switching period and the band that does not involve the uplink radio frequency chain switching are bands in which uplink radio frequency chain switching can be performed. In other words, the uplink radio frequency chain switching is supported between the band in which uplink switching is performed in the uplink radio frequency chain switching period and the band that does not involve the uplink radio frequency chain switching. For example, the terminal device supports the uplink radio frequency chain switching in three bands. The three bands are a band 1, a band 2, and a band 3. If a radio frequency chain is switched from the band 1 to the band 2, a radio frequency chain in the band 3 does not change. In this example, a time period in which the radio frequency chain is switched from the band 1 to the band 2 may be referred to as a radio frequency chain switching period, the band 1 and the band 2 are referred to as bands in which uplink switching is performed in the radio frequency chain switching period (or referred to as bands that involve uplink radio frequency chain switching), and the band 3 is referred to as a band that does not involve the uplink radio frequency chain switching in the uplink radio frequency chain switching period.

In addition, that uplink radio frequency chain switching is supported in a plurality of bands may be understood as follows: Radio frequency chain switching can be implemented between every two of the plurality of bands. For example, if the terminal device supports the uplink radio frequency chain switching in a band A, a band B, and a band C, the terminal device may perform uplink radio frequency chain switching between the band A and the band B, may perform uplink radio frequency chain switching between the band A and the band C, and may perform uplink radio frequency chain switching between the band B and the band C.

Optionally, that uplink radio frequency chain switching is supported between a plurality of bands may also be understood as follows: Uplink radio frequency chain switching can be performed between a part of the bands (for example, at least two bands), and another part of the bands (for example, at least two bands) share a radio frequency chain. For example, if the terminal device supports the uplink radio frequency chain switching in a band A, a band B, and a band C, the terminal device may perform uplink radio frequency chain switching between the band A and the band B, may perform uplink radio frequency chain switching between the band A and the band C, and may share a radio frequency chain between the band B and the band C. That at least two bands share a radio frequency chain may be understood as follows: If a radio frequency chain operates on one of the at least two bands, the radio frequency chain is available on the at least two bands at the same time. That at least two bands share a radio frequency chain may be understood as follows: If a radio frequency chain operates on at least one carrier in one of the at least two bands, the radio frequency chain is available on all carriers in the at least two bands at the same time.

Further, that the first capability indication indicates that the terminal device causes no uplink transmission interruption in a band that does not involve uplink radio frequency chain switching in an uplink radio frequency chain switching period may be understood as follows: The terminal device supports the uplink radio frequency chain switching in a plurality of bands. When uplink radio frequency chain switching is performed only in a part of the plurality of bands supported by the terminal device, and uplink radio frequency chain switching is not performed in another part of the bands, no uplink transmission interruption is caused in a band in which uplink radio frequency chain switching is not performed, but an uplink transmission interruption is caused in a band in which uplink radio frequency chain switching is performed. The foregoing example is still used. If the terminal device supports the uplink radio frequency chain switching in the band 1, the band 2, and the band 3, the first capability indication indicates that when the terminal device performs uplink radio frequency chain switching in any two of the band 1, the band 2, and the band 3, no uplink transmission interruption is caused in a band in which uplink radio frequency chain switching is not performed. For example, when the terminal device performs uplink radio frequency chain switching in the band 1 and the band 2, and the band 3 does not involve the uplink radio frequency chain switching, uplink transmission on the band 3 is not interrupted. For another example, when the terminal device performs uplink radio frequency chain switching in the band 2 and the band 3, and the band 1 does not involve the uplink radio frequency chain switching, uplink transmission on the band 1 is not interrupted.

In addition, that no uplink transmission interruption is caused in a band may be understood as follows: In an uplink radio frequency chain switching period of another band or when uplink radio frequency chain switching starts to be performed in another band, uplink transmission is originally performed in the band, and the uplink transmission that is originally performed in the band is not interrupted in the uplink radio frequency chain switching period of the another band or when uplink radio frequency chain switching starts to be performed in the another band, that is, uplink transmission that is originally performed in the band may continue to be performed. That no uplink transmission interruption is caused in a band may also be understood as follows: In an uplink radio frequency chain switching period of another band, if there is a radio frequency chain in the band, the access network device may configure or schedule the band for uplink transmission in the uplink radio frequency chain switching period of the another band.

For example, the terminal device may use an information element or at least one bit in an information element to indicate the first capability indication. When the terminal device sends the first capability indication to the access network device, it indicates that the terminal device has a capability corresponding to the first capability indication.

In an optional implementation, the first message may be a response message in response to a capability enquiry request sent by the access network device to the terminal device. For example, the access network device sends a UE capability enquiry (UE capability enquiry) to the terminal device, and the terminal device sends a response message based on the UE capability enquiry to the access network device. The response message is used to carry capability information (UE capability information) of the terminal device. The first capability indication may be carried in the capability information of the terminal device. In another optional implementation, the first message may alternatively be a message actively reported by the terminal device to the access network device. This is not specifically limited in this application.

For example, the first message may be a message or an information element (information element) used to report an UplinkTxSwitch related capability. For example, the first message may be a BandCombination-UplinkTxSwitch information element.

In this implementation, the terminal device can report the first capability indication to the access network device. The first capability indication can indicate that the terminal device causes no uplink transmission interruption in the band that does not involve the uplink radio frequency chain switching in the uplink radio frequency chain switching period, and the uplink radio frequency chain switching is supported between a band in which uplink switching is performed in the uplink radio frequency chain switching period and the band that does not involve the uplink radio frequency chain switching. In other words, when both a band in which uplink radio frequency chain switching is being performed and a band that does not involve the uplink radio frequency chain switching exist in several bands that support the uplink radio frequency chain switching, no uplink transmission interruption is caused in the band that does not involve the uplink radio frequency chain switching. When no uplink interruption is caused in the band that does not involve the uplink radio frequency chain switching, this helps avoid a waste of time-frequency resources.

Based on the foregoing embodiment, the terminal device further needs to report, to the access network device, bands that support the uplink radio frequency chain switching. In a possible implementation, in addition to the first capability indication, the first message further includes indication information of at least three bands, and the at least three bands support the uplink radio frequency chain switching. In another possible implementation, the terminal device sends indication information of at least three bands to the access network device by using another message. In other words, the terminal device may send the indication information of the at least three bands and the first capability indication to the access network device by using different messages, or may send the indication information and the first capability indication to the access network device by using a same message (for example, the first message).

It should be understood that the indication information of the at least three bands may be an identifier of each of the at least three bands, or may be a frequency value of each of the at least three bands. Certainly, the following is not excluded: The terminal device subsequently indicates the indication information of the at least three bands in another manner. In addition, in this application, that the terminal device reports a band to the access network device may be understood follows: The terminal device sends indication information of the band to the access network device by using a message (for example, the first message). For example, that the terminal device reports the band A to the access network device may also be understood as follows: The terminal device sends indication information of the band A to the access network device. The indication information of the band A may be an identifier of the band A, may be a frequency value of the band A, or may be other information indicating the band A. Similarly, that the terminal device reports at least three band to the access network device may be understood as follows: The terminal device sends indication information of the at least three bands to the access network device by using a message (for example, the first message). The indication information of the at least three bands may be indication information of each of the at least three bands, or may be indication information of a band combination (for example, indication information of a first band combination and indication information of a second band combination that are described below). This is not specifically limited herein.

Specifically, the terminal device may report the at least three bands to the access network device in any one of the following manners. In other words, the terminal device may notify, in any one of the following manners, the access network device of bands that can be supported by the terminal device for the uplink radio frequency chain switching.

In an optional implementation, the terminal device indicates, to the access network device by using a band combination (band collection), bands in which uplink radio frequency chain switching can be performed. For ease of description, in this application, the foregoing set including a plurality of bands is referred to as an initial band combination. However, during actual application, use of another name to represent the foregoing set including a plurality of bands, for example, a band group (band group) is not excluded. The initial band combination includes the at least three bands, and the initial band combination indicates that the band in the initial band combination supports the uplink radio frequency chain switching. For example, the initial band combination is {A, B, C}, indicating that uplink radio frequency chain switching can be performed in any two of the three bands: the band A, the band B, and the band C in the initial band combination. For another example, the initial band combination is {A, B, C, D}, indicating that uplink radio frequency chain switching can be performed in any two of three bands: the band A, the band B, and the band C (or a band D) in the initial band combination, where the band C and the band D may share a radio frequency chain without radio frequency chain switching. In a conventional technology, a band pair (band pair) commonly represents bands in which uplink radio frequency chain switching can be performed, and the band pair includes only two bands.

Optionally, the at least three bands may have a same band.

Optionally, the terminal device sends the first capability indication and the indication information of the initial band combination together to the access network device by using the first message; or the terminal device separately sends the first capability indication and the indication information of the initial band combination to the access network device by using different messages.

In another optional implementation, the terminal device indicates, to the access network device by using a plurality of band pairs (band pairs), bands in which uplink radio frequency chain switching can be performed. Specifically, the terminal device may form at least three band pairs by using the at least three bands. Each band pair includes two of the at least three bands, each band pair indicates that the two bands in the band pair support the switching, and a same band exists between any two of the at least three band pairs. For ease of understanding, an example in which the terminal device reports, to the access network device, that the three bands: the band A, the band B, and the band C support the uplink radio frequency chain switching is used. In this case, the terminal device reports, to the access network device, that a band pair 1 is {A, B}, a band pair 2 is {A, C}, and a band pair 3 is {B, C}. The band pair 1 indicates that uplink radio frequency chain switching can be performed in the band A and the band B; the band pair 2 indicates that uplink radio frequency chain switching can be performed in the band A and the band C; and the band pair 3 indicates that uplink radio frequency chain switching can be performed in the band B and the band C. Therefore, uplink radio frequency chain switching can be performed between the band A, the band B, and the band C.

Optionally, the terminal device sends the first capability indication and indication information of the at least three band pairs together to the access network device by using the first message; or the terminal device separately sends the first capability indication and indication information of the at least three band pairs to the access network device by using different messages. Particularly, in some scenarios, the terminal device may first report several band pairs to the access network device, and the terminal device further reports several band pairs to the access network device in a subsequent message or subsequent signaling. All the band pairs reported at the two times can indicate that switching can be performed in at least three bands corresponding to the foregoing band pairs. For example, the terminal device reports, to the access network device in a message, that the band pair 1 is {A, B} and the band pair 2 is {A, C}. The terminal device reports, to the access network device by using another message, that the band pair 3 is {B, C}.

In this application, the terminal device may report, to the access network device in any one of the foregoing manners, the at least three bands that support the uplink radio frequency chain switching. A reporting manner used during actual application is not limited in this application.

In addition, in this application, there may be different implementations for a range indicated by the first capability indication. A range (or a granularity) indicated by the first capability indication may be understood as follows: The first capability indication indicates only a band, or the first capability indication may indicate a group of bands, or the first capability indication may indicate all bands in which switching can be performed and that are reported by the terminal device. The following provides specific descriptions.

In an optional implementation, the first capability indication corresponds to at least one band, and the at least one band is a band in the at least three bands reported by the terminal device to the access network device. Optionally, a band corresponding to the first capability indication is a band that belongs to the initial band combination. For ease of description, a set including the foregoing several bands is referred to as the first band combination, and the first band combination is a subset of a set including the at least three bands. Optionally, the first band combination is a subset of the initial band combination. The first capability indication corresponds to the first band combination. In this case, the first capability indication indicates that the band in the first band combination supports causing no uplink transmission interruption in the uplink radio frequency chain switching period when the uplink radio frequency chain switching is not involved.

For example, it is assumed that the terminal device reports four bands: the band A, the band B, the band C, and the band D, and the four bands support the uplink radio frequency chain switching. In addition, the first capability indication corresponds to the band A and the band B. In this case, the first band combination is {A, B}, indicating that the band A and the band B support causing no uplink transmission interruption in the uplink radio frequency chain switching period when the uplink radio frequency chain switching is not involved. For example, when uplink radio frequency chain switching is performed in any two or three of the band B, the band C, and the band D, and uplink radio frequency chain switching is not performed in the band A, uplink transmission of the terminal device in the band A is not interrupted, or the terminal device may maintain uplink transmission in the band A. For another example, when uplink radio frequency chain switching is performed in any two or three of the band A, the band C, and the band D, and uplink radio frequency chain switching is not performed in the band B, uplink transmission of the terminal device in the band B is not interrupted, or the terminal device may maintain uplink transmission in the band B.

In this implementation, the first capability indication may be reported by using a bitmap (bitmap), and each bit (bit) in the bitmap corresponds to one band or one carrier. In this case, the entire bitmap may be understood as a first capability indication, and each bit in the bitmap corresponds to one band in the initial band combination. A part of bits corresponds to the band in the first band combination. If a value of a bit corresponding to the band in the first band combination is 1, it indicates that the band supports causing no uplink transmission interruption in the uplink radio frequency chain switching period when the uplink radio frequency chain switching is not involved. In addition, a value of a remaining bit (that is, a bit other than the bit corresponding to the band in the first band combination) in the bitmap is 0 or null.

Optionally, that the first message further includes indication information of the first band combination may also be understood as follows: The message carrying the first capability indication further includes the indication information of the first band combination. In addition, when the first message further includes the indication information of the initial band combination, different information elements may be used to distinguish between the indication information of the first band combination and the indication information of the initial band combination.

In another optional implementation, the first capability indication corresponds to a band, and the terminal device causes no uplink transmission interruption in the band only when uplink radio frequency chain switching is performed in a specific band and the band does not involve the uplink radio frequency chain switching. For ease of description, the band corresponding to the first capability indication is referred to as a third band, that is, the first capability indication corresponds to the third band, and the third band belongs to the first band combination. For descriptions of the first band combination, refer to the foregoing implementation. In addition, the first message further includes indication information of the second band combination, and the second band combination is a subset of a set including the at least three bands. Optionally, the second band combination is a subset of the initial band combination. The third band does not belong to the second band combination. In this case, the first capability indication indicates that the terminal device causes no uplink transmission interruption in the third band when uplink radio frequency chain switching is performed in a band in the second band combination and the third band does not involve the uplink radio frequency chain switching.

For example, it is assumed that the terminal device reports six bands: the band A, the band B, the band C, the band D, a band E, and a band F, and the six bands support the uplink radio frequency chain switching. It is assumed that the first band combination is {A, B}, and the second band combination is {E, F}. Both the band A and the band B may be understood as third bands. In this example, a second band combination corresponding to the band Ais {E, F}, and a second band combination corresponding to the band B is also {E, F}. In this case, the first capability indication indicates that if uplink radio frequency chain switching is performed between the band E and the band F, and the band (for example, the band A or the band B) in the first band combination does not involve the uplink radio frequency chain switching, the terminal device causes no uplink transmission interruption in the band in the first band combination. However, when uplink radio frequency chain switching is performed in a band other than the second band combination, even if the band in the first band combination does not involve the uplink radio frequency chain switching, the terminal device still causes an uplink transmission interruption in the band in the first band combination. For example, when uplink radio frequency chain switching is performed between the band C and the band D, and the band (for example, the band A or the band B) in the first band combination does not involve the uplink radio frequency chain switching, the terminal device still causes an uplink transmission interruption in the band in the first band combination. For another example, when uplink radio frequency chain switching is performed between the band C and the band F, and the band (for example, the band A or the band B) in the first band combination does not involve the uplink radio frequency chain switching, the terminal device still causes an uplink transmission interruption in the band in the first band combination.

Particularly, the at least two bands may correspond to one first capability indication. For example, at least two bands are close and have narrow bandwidths. In this case, the at least two bands may share a radio frequency chain. For example, the terminal device reports four bands: the band A, the band B, the band C, and the band D to the access network device. B and C share a radio frequency chain. In this case, the band A may correspond to one first capability indication, the band B and the band C may correspond to one first capability indication, and the band D may correspond to one first capability indication. For example, if each first capability indication is reported by using 1 bit, only 3 bits may be used when the capability indications of the four bands are reported. The first capability indication of the band A uses 1 bit, the first capability indication shared by the band B and the band C uses 1 bit, and the first capability indication of the band D uses 1 bit.

Optionally, that the first message further includes indication information of the third band in the first band combination and the indication information of the second band combination may also be understood as follows: The message carrying the first capability indication further includes the indication information of the third band in the first band combination and the indication information of the second band combination. In addition, when the first message further includes the indication information of the initial band combination, different information elements may be used to distinguish between the indication information of the first band combination, the indication information of the initial band combination, and the indication information of the second band combination.

In another optional implementation, the first capability indication indicates that no uplink transmission interruption is caused in the third band when at least one band in which uplink radio frequency chain switching is performed belongs to the second band combination. This implementation is compared with the previous implementation. In the previous implementation, uplink radio frequency chain switching is performed only in the band in the second band combination, and the third band does not involve the uplink radio frequency chain switching. In this case, no uplink transmission interruption is caused in the third band. In this implementation, provided that at least one band in bands in which uplink radio frequency chain switching is performed belongs to the second band combination, and the third band does not involve the uplink radio frequency chain switching, no uplink transmission interruption is caused in the third band. The third band belongs to the first band combination.

For example, the foregoing example is still used. It is assumed that the terminal device reports six bands: the band A, the band B, the band C, the band D, the band E, and the band F, and the six bands support the uplink radio frequency chain switching. It is assumed that the first band combination is {A, B}, and the second band combination is {E, F}. Both the band A and the band B may be understood as third bands. In this example, a second band combination corresponding to the band A is {E, F}, and a second band combination corresponding to the band B is also {E, F}. In this case, the first capability indication indicates that if a band in which uplink radio frequency chain switching is performed relates to the band (that is, the band E and the band F) in the second band combination, and the band (for example, the band A or the band B) in the first band combination does not involve the uplink radio frequency chain switching, the terminal device causes no uplink transmission interruption in the band in the first band combination. For example, when uplink radio frequency chain switching is performed between the band C and the band F (or the band C and the band E, or the band D and the band F, or the band D and the band E), and the band (for example, the band A or the band B) in the first band combination does not involve the uplink radio frequency chain switching, the terminal device causes no uplink transmission interruption in the band in the first band combination. However, when the band in which the uplink radio frequency chain switching is performed does not relate to the band in the second band combination, even if the band in the first band combination does not involve the uplink radio frequency chain switching, the terminal device still causes an uplink transmission interruption in the band in the first band combination. For example, when uplink radio frequency chain switching is performed between the band C and the band D, and the band (for example, the band A or the band B) in the first band combination does not involve the uplink radio frequency chain switching, the terminal device still causes an uplink transmission interruption in the band in the first band combination.

In addition, two different third bands may correspond to different second band combinations. The foregoing example is still used. It is assumed that the terminal device reports six bands: the band A, the band B, the band C, the band D, the band E, and the band F, and the six bands support the uplink radio frequency chain switching. It is assumed that the first band combination is {A, B}, and both the band A and the band B may be understood as third bands. It is also assumed that a second band combination corresponding to the band A is {E, F}, and a second band combination corresponding to the band B is {D, F}.

In this case, for the band A, the first capability indication indicates that if a band in which uplink radio frequency chain switching is performed relates to the band (that is, the band E and the band F) in the second band combination, and the band A does not involve the uplink radio frequency chain switching, the terminal device causes no uplink transmission interruption in the band A. For example, when uplink radio frequency chain switching is performed between the band C and the band F (or the band C and the band E, or the band D and the band F, or the band D and the band E), and the band A does not involve the uplink radio frequency chain switching, the terminal device causes no uplink transmission interruption in the band A. However, when the band in which the uplink radio frequency chain switching is performed does not relate to the band in the second band combination, even if the band A does not involve the uplink radio frequency chain switching, the terminal device still causes an uplink transmission interruption in the band A. For example, when uplink radio frequency chain switching is performed between the band C and the band D, and the band A does not involve the uplink radio frequency chain switching, the terminal device still causes an uplink transmission interruption in the band A.

For the band B, the first capability indication indicates that if a band in which uplink radio frequency chain switching is performed relates to the band (that is, the band D and the band F) in the second band combination, and the band B does not involve the uplink radio frequency chain switching, the terminal device causes no uplink transmission interruption in the band B. For example, when uplink radio frequency chain switching is performed between the band C and the band F (or the band D and the band E, or the band D and the band C, or the band E and the band F), and the band B does not involve the uplink radio frequency chain switching, the terminal device causes no uplink transmission interruption in the band B. However, when the band in which the uplink radio frequency chain switching is performed does not relate to the band in the second band combination, even if the band B does not involve the uplink radio frequency chain switching, the terminal device still causes an uplink transmission interruption in the band B. For example, when uplink radio frequency chain switching is performed between the band C and the band E, and the band B does not involve the uplink radio frequency chain switching, the terminal device still causes an uplink transmission interruption in the band B.

In another optional implementation, the first capability indication corresponds to a band, and the terminal device causes no uplink transmission interruption in the band only when uplink radio frequency chain switching is not performed in a specific band and the band does not involve the uplink radio frequency chain switching. For ease of description, the band corresponding to the first capability indication is referred to as a third band, that is, the first capability indication corresponds to the third band, and the third band belongs to the first band combination. For descriptions of the first band combination, refer to the foregoing implementation. In addition, the first message further includes indication information of a sixth band combination, and the sixth band combination is a subset of a set including the at least three bands. Optionally, the sixth band combination is a subset of the initial band combination. The third band does not belong to the sixth band combination. In this case, the first capability indication indicates that the terminal device causes no uplink transmission interruption in the third band when uplink radio frequency chain switching is not performed in a band in the sixth band combination. In other words, if the band in which uplink radio frequency chain switching is performed does not include the band in the sixth band combination, and the third band does not involve the uplink radio frequency chain switching, no uplink transmission interruption is caused in the third band.

For example, it is assumed that the terminal device reports six bands: the band A, the band B, the band C, the band D, a band E, and a band F, and the six bands support the uplink radio frequency chain switching. It is assumed that the first band combination is {A, B}, and the sixth band combination is {E, F}. Both the band A and the band B may be understood as third bands. In this example, a sixth band combination corresponding to the band A is {E, F}, and a sixth band combination corresponding to the band B is also {E, F}. In this case, the first capability indication indicates that if a band in which uplink radio frequency chain switching is performed does not include the band E or the band F, and the band (for example, the band A or the band B) in the first band combination does not involve the uplink radio frequency chain switching, the terminal device causes no uplink transmission interruption in the band in the first band combination. For example, when uplink radio frequency chain switching is performed between the band C and the band D, and the band (for example, the band A or the band B) in the first band combination does not involve the uplink radio frequency chain switching, the terminal device causes no uplink transmission interruption in the band in the first band combination. However, when uplink radio frequency chain switching is performed in the band in the sixth band combination, even if the band in the first band combination does not involve the uplink radio frequency chain switching, the terminal device still causes an uplink transmission interruption in the band in the first band combination. For example, when uplink radio frequency chain switching is performed between the band C and the band E (or the band D and the band F, or the band F and the band E), and the band (for example, the band A or the band B) in the first band combination does not involve the uplink radio frequency chain switching, the terminal device still causes an uplink transmission interruption in the band in the first band combination.

For example, it is assumed that the terminal device reports six bands: the band A, the band B, the band C, the band D, a band E, and a band F, and the six bands support the uplink radio frequency chain switching. It is assumed that the first band combination is {A, B}. Both the band A and the band B may be understood as third bands. In addition, it is assumed that a sixth band combination corresponding to the band A is {C, E}, and a sixth band combination corresponding to the band B is {E, F}. In this case, for the band A, the first capability indication indicates that if a band in which uplink radio frequency chain switching is performed does not include the band C or the band E, and the band A does not involve the uplink radio frequency chain switching, the terminal device causes no uplink transmission interruption in the band A. For the band B, the first capability indication indicates that if the band in which uplink radio frequency chain switching is performed does not include the band E or the band F, and the band B does not involve the uplink radio frequency chain switching, the terminal device causes no uplink transmission interruption in the band B.

In this application, the terminal device may report one or more bands to the access network device. Usually, one band includes one or more carriers. The access network device may select one or more carriers from the one or more bands and configure the one or more carriers for the terminal device, and then the terminal device performs communication by using the carrier configured by the access network device. For example, the terminal device sends uplink transmission on a carrier in a band. It can be learned that, in some possible scenarios, all or a part of the bands in the foregoing descriptions of step 301 may be replaced with carriers.

In this case, the foregoing uplink radio frequency chain switching period may also be understood as a time period in which the terminal device performs uplink radio frequency chain switching on two or more carriers. In other words, when the terminal device is in the uplink radio frequency chain switching period, it indicates that the terminal device is performing uplink radio frequency chain switching on the at least two carriers. The at least two carriers on which uplink radio frequency chain switching is performed may belong to a same band. Each of the at least two carriers may alternatively belong to a different band. Apart of the at least two carriers may belong to a same band, and a part of the carriers may belong to different bands. This is not specifically limited herein.

In addition, the carrier that does not involve the uplink radio frequency chain switching refers to a carrier on which uplink radio frequency chain switching is not performed in the foregoing uplink radio frequency chain switching period. However, the following is not excluded: On a carrier on which uplink radio frequency chain switching is not performed currently, uplink radio frequency chain switching may be performed at a subsequent moment. It should be noted that, both the carrier on which uplink switching is performed in the uplink radio frequency chain switching period and the carrier that does not involve the uplink radio frequency chain switching are carriers on which uplink radio frequency chain switching can be performed. In other words, the uplink radio frequency chain switching is supported between the carrier on which uplink switching is performed in the uplink radio frequency chain switching period and the carrier that does not involve the uplink radio frequency chain switching. For example, the terminal device supports the uplink radio frequency chain switching on three carriers. The three carriers are a carrier 1, a carrier 2, and a carrier 3. If a radio frequency chain is switched from the carrier 1 to the carrier 2, a radio frequency chain on the carrier 3 does not change. In this example, a time period in which the radio frequency chain is switched from the carrier 1 to the carrier 2 may be referred to as a radio frequency chain switching period, the carrier 1 and the carrier 2 are referred to as carriers on which uplink switching is performed in the radio frequency chain switching period (or referred to as carriers that involve uplink radio frequency chain switching), and the carrier 3 is referred to as a carrier that does not involve the uplink radio frequency chain switching in the uplink radio frequency chain switching period.

Further, the first capability indication indicates that the terminal device causes no uplink transmission interruption on a carrier that does not involve the uplink radio frequency chain switching in the uplink radio frequency chain switching period. This may be understood as follows: The terminal device supports the uplink radio frequency chain switching on a plurality of carriers. When uplink radio frequency chain switching is performed only on a part of the plurality of carriers supported by the terminal device, and uplink radio frequency chain switching is not performed on another part of the carriers, no uplink transmission interruption is caused on a carrier on which uplink radio frequency chain switching is not performed, but an uplink transmission interruption is caused on a carrier on which uplink radio frequency chain switching is performed.

Optionally, at least two of at least three carriers that support the uplink radio frequency chain switching belong to a same cell, or have a same carrier ID, or share a same hybrid automatic repeat request (hybrid automatic repeat request, HARQ) entity.

In this implementation, the terminal device can report the first capability indication to the access network device. The first capability indication can indicate that the terminal device causes no uplink transmission interruption on the carrier that does not involve the uplink radio frequency chain switching in the uplink radio frequency chain switching period, and the uplink radio frequency chain switching is supported between the carrier on which uplink switching is performed in the uplink radio frequency chain switching period and the carrier that does not involve the uplink radio frequency chain switching. In other words, when both a carrier on which uplink radio frequency chain switching is being performed and a carrier that does not involve the uplink radio frequency chain switching exist in several carriers that support the uplink radio frequency chain switching, no uplink transmission interruption is caused on the carrier that does not involve the uplink radio frequency chain switching. When no uplink interruption is caused on the carrier that does not involve the uplink radio frequency chain switching, this helps avoid a waste of time-frequency resources.

In addition, in addition to the first capability indication to the access network device, the terminal device further needs to report, to the access network device, carriers that support the uplink radio frequency chain switching. In other words, the terminal device needs to report, to the access network device, carriers that support the uplink radio frequency chain switching.

It should be understood that, if the terminal device supports the uplink radio frequency chain switching on the at least three carriers, the terminal device needs to report the at least three carriers to the access network device. However, during actual application, the terminal device usually reports the carriers to the access network device in a form of a band. For example, the terminal device reports, to the access network device, several bands including the at least three carriers. Specifically, the terminal device may send, to the access network device by using a message (for example, the first message carrying the first indication information), indication information including the bands of the at least three carriers. Optionally, the message may further carry the indication information of the at least three carriers.

In a possible implementation, each of the at least three carriers belongs to one band, that is, each of the at least three carriers belong to a different band. In this case, the at least three carriers belong to at least three bands. In other words, the terminal device may report the at least three carriers to the access network device by reporting the at least three bands to the access network device. For example, if the terminal supports the uplink radio frequency chain switching between a carrier a, a carrier b, a carrier c, and a carrier d, the terminal device may report the band A, the band B, the band C, and the band D to the access network device. The carrier a belongs to the band A, the carrier b belongs to the band B, the carrier c belongs to the band C, and the carrier d belongs to the band D.

In another possible implementation, a part of the at least three carriers belongs to one band, and each carrier in another part of the carriers belongs to a different band. In this case, the at least three carriers belong to at least two bands. In other words, the terminal device may report the at least three carriers to the access network device by reporting the at least two bands to the access network device. For example, if the terminal supports the uplink radio frequency chain switching between a carrier a, a carrier b, a carrier c, and a carrier d, the terminal device may report the band A, the band B, and the band C to the access network device. The carrier a belongs to the band A, the carrier b belongs to the band B, and both the carrier c and the carrier d belong to the band C.

Particularly, the terminal device may report only two bands, and the two bands include the at least three carriers. At least two of the at least three carriers on which uplink radio frequency chain switching is performed belong to one band, and at least one of the at least three carriers on which uplink radio frequency chain switching is performed belongs to another band.

Particularly, the at least three carriers may belong to one band. In this case, the terminal device may report only one band, and the band includes the at least three carriers.

In addition, in this application, there may be different implementations for a range indicated by the first capability indication. A range (or a granularity) indicated by the first capability indication may be understood as follows: The first capability indication indicates only a carrier, or the first capability indication may indicate a group of carriers, or the first capability indication may indicate all carriers on which switching can be performed and that are reported by the terminal device. The following provides specific descriptions.

In an optional implementation, the first capability indication corresponds to a carrier in a band, or the first capability indication corresponds to several carriers. The several carriers may belong to different bands, or may belong to a same band. For ease of description, the foregoing set including one or more carriers is referred to as a first carrier set. The first capability indication corresponds to the first carrier set. The carriers in the first carrier set belong to at least two of the at least three bands (that is, the bands that support the uplink radio frequency chain switching and that are reported by the terminal device to the access network device). For example, the first carrier set includes three carriers, where two carriers belong to one of the at least three bands (that is, the bands that support the uplink radio frequency chain switching and that are reported by the terminal device to the access network device), and the other carrier belongs to another band in the at least three bands (that is, the bands that support the uplink radio frequency chain switching and that are reported by the terminal device to the access network device). Optionally, the carrier in the first carrier set belongs to a band in the initial band combination. The first capability indication indicates that the carrier in the first carrier set supports causing no uplink transmission interruption in the uplink radio frequency chain switching period when the uplink radio frequency chain switching is not involved. For example, if the first carrier set includes the carrier 1, the carrier 2, and the carrier 3, the first capability indication indicates that when another band or another carrier involves the uplink radio frequency chain switching, and the carrier in the first carrier set does not involve the uplink radio frequency chain switching, no uplink transmission interruption is caused on a carrier that is in the first carrier set and that does not involve the uplink radio frequency chain switching.

Particularly, at least two carriers in the first carrier set belong to a same band, and the at least two carriers may share a radio frequency chain. In this case, the at least two carriers may correspond to one first capability indication. For example, if each first capability indication is reported by using 1 bit, only 1 bit may be used when the capability indication of the at least two bands is reported.

Optionally, that the first message further includes the indication information of the first carrier set may also be understood as follows: The message carrying the first capability indication further includes the first carrier set. In addition, when the first message further includes the indication information of the initial band combination, different information elements may be used to distinguish between the indication information of the first carrier set and the indication information of the initial band combination.

It should be noted that, in this application, the "band" in the foregoing descriptions of the first capability indication may be partially or completely replaced with a "carrier", or a "carrier that belongs to the band". For example, in the foregoing embodiment, the expression "performing uplink radio frequency chain switching in a band" may be replaced with "performing uplink radio frequency chain switching on a carrier that belongs to the band". For another example, in the foregoing embodiment, the expression "causing no transmission interruption in a band" may be replaced with "causing no transmission interruption occurs on a carrier that belongs to the band".

In this application, the terminal device may report the indication granularity of the first capability indication to the access network device in any one of the foregoing manners. A reporting manner used during actual application is not limited in this application.

Optionally, after the terminal device sends the first message to the access network device, the terminal device may further perform the following step: In the uplink radio frequency chain switching period, the terminal device causes an uplink transmission interruption in the band in which the uplink radio frequency chain switching is performed and a band in a fourth band combination. The band in the fourth band combination is a band that is in the at least three bands and that does not belong to the first band combination.

Optionally, after the terminal device sends the first message to the access network device, the terminal device may further perform the following step: In the uplink radio frequency chain switching period, the terminal device causes an uplink transmission interruption on the carrier on which uplink radio frequency chain switching is performed and a carrier in a third carrier set. The carrier in the third carrier set is a carrier that does not belong to the first carrier set. In addition, the carrier in the third carrier set is configured by the access network device for the terminal device, and is a carrier on which uplink radio frequency chain switching can be performed with the foregoing carrier on which uplink radio frequency chain switching is performed.

Optionally, after the terminal device sends the first message to the access network device, the terminal device may further perform the following step: In the uplink radio frequency chain switching period, the terminal device causes an uplink transmission interruption on the carrier on which uplink radio frequency chain switching is performed and a carrier in a fourth carrier set. If all carriers on which uplink radio frequency chain switching is performed belong to a band in the second band combination, the carrier in the fourth carrier set does not belong to the third band. In addition, the carrier in the fourth carrier set is configured by the access network device for the terminal device, and is a carrier on which uplink radio frequency chain switching can be performed with the foregoing carrier on which uplink radio frequency chain switching is performed. The second band combination is a subset of a set including the at least three bands. Optionally, the second band combination is a subset of the initial band combination. The third band is a band that belongs to the first band combination and that does not belong to the second band combination. In this case, when the first capability indication indicates that the terminal device causes no uplink transmission interruption in the third band when uplink radio frequency chain switching is performed in a band in the second band combination and the third band does not involve the uplink radio frequency chain switching.

Optionally, after the terminal device sends the first message to the access network device, the terminal device may further perform the following step: In the uplink radio frequency chain switching period, the terminal device causes an uplink transmission interruption on the carrier on which uplink radio frequency chain switching is performed and a carrier in a fifth carrier set. If at least one of carriers on which uplink radio frequency chain switching is performed belongs to a band in the second band combination, the carrier in the fifth carrier set does not belong to the third band. In addition, the carrier in the fifth carrier set is configured by the access network device for the terminal device, and is a carrier on which uplink radio frequency chain switching can be performed with the foregoing carrier on which uplink radio frequency chain switching is performed. The second band combination is a subset of a set including the at least three bands. Optionally, the second band combination is a subset of the initial band combination. The third band is a band that belongs to the first band combination and that does not belong to the second band combination. In this case, the first capability indication indicates that provided that at least one of bands in which uplink radio frequency chain switching is performed belongs to the second band combination, and the third band does not involve the uplink radio frequency chain switching, no uplink transmission interruption is caused in the third band.

Optionally, after the terminal device sends the first message to the access network device, the terminal device may further perform the following step: In the uplink radio frequency chain switching period, the terminal device causes an uplink transmission interruption on the carrier on which uplink radio frequency chain switching is performed and a carrier in a sixth carrier set. If none of carriers on which uplink radio frequency chain switching is performed belongs to the band in the sixth band combination, the carrier in the sixth carrier set does not belong to the third band. In addition, the carrier in the sixth carrier set is configured by the access network device for the terminal device, and is a carrier on which uplink radio frequency chain switching can be performed with the foregoing carrier on which uplink radio frequency chain switching is performed.

It should be understood that, in the foregoing implementation, the first capability indication indicates that the terminal device supports a first capability, that is, indicates that the terminal device causes no uplink transmission interruption in the band that does not involve the uplink radio frequency chain switching in the uplink radio frequency chain switching period. However, during actual application, the first capability indication may be represented as an option, that is, the first capability indication indicates whether the first capability is supported. With reference to FIG. 4, the following describes another embodiment of the uplink transmission capability determining method provided in this application. In the method, a terminal device and an access network device mainly perform the following steps.

Step 401: The terminal device sends a first message to the access network device. Correspondingly, the access network device receives the first message from the terminal device. The first message carries a first capability indication, and the first capability indication indicates whether the terminal device causes an uplink transmission interruption in a band that does not involve uplink radio frequency chain switching in an uplink radio frequency chain switching period.

For definitions of terms such as an "uplink radio frequency chain switching period" and a "band that does not involve uplink radio frequency chain switching", refer to related descriptions of the foregoing step 301. In addition, for a manner of reporting, by the terminal device to the access network device, bands that support the uplink radio frequency chain switching, refer to related descriptions of the foregoing step 301. Details are not described again in this application.

A difference between this implementation and the implementation corresponding to FIG. 3 lies only in that the first capability indication may indicate that uplink transmission is interrupted in a case, or may indicate that uplink transmission is not interrupted in another case.

For example, in the embodiment corresponding to FIG. 3, the terminal device may use an information element to indicate the first capability indication. When the terminal device sends the first capability indication to the access network device, it indicates that the terminal device has a capability corresponding to the first capability indication. However, in the embodiment corresponding to FIG. 4, regardless of whether a band or a carrier supports the first capability, the terminal device reports the first capability indication to the access network device, and a value of the first capability indication indicates whether the band or the carrier has the first capability. For example, the first capability indication is indicated by using 1 bit. When a value of the 1 bit is 1, it indicates that the band or the carrier has the first capability. When a value of the 1 bit is 0, it indicates that the band or the carrier does not have the first capability.

In this implementation, the first capability indication may be reported by using a bitmap (bitmap), and each bit (bit) in the bitmap corresponds to one band or one carrier. In this case, whether each of the at least three bands supports the first capability may be reported by using the bitmap.

For example, when a value of a bit corresponding to a band (or a carrier) in the bitmap is 1, it indicates that a first capability indication corresponding to the band (or the carrier) indicates that the band (or the carrier) has the first capability. To be specific, in the uplink radio frequency chain switching period, if the band (or the carrier) does not involve the uplink radio frequency chain switching, no uplink transmission interruption is caused in the band (or on the carrier). When a value of a bit corresponding to a band (or a carrier) in the bitmap is 0, it indicates that a first capability indication corresponding to the band (or the carrier) indicates that the band (or the carrier) does not have the first capability. To be specific, in the uplink radio frequency chain switching period, if the band (or the carrier) does not involve the uplink radio frequency chain switching, an uplink transmission interruption is caused in the band (or on the carrier).

For example, when a value of a bit corresponding to a band (or a carrier) in the bitmap is 0, it indicates that a first capability indication corresponding to the band (or the carrier) indicates that the band (or the carrier) has the first capability. To be specific, in the uplink radio frequency chain switching period, if the band (or the carrier) does not involve the uplink radio frequency chain switching, no uplink transmission interruption is caused in the band (or on the carrier). When a value of a bit corresponding to a band (or a carrier) in the bitmap is 1, it indicates that a first capability indication corresponding to the band (or the carrier) indicates that the band (or the carrier) does not have the first capability. To be specific, in the uplink radio frequency chain switching period, if the band (or the carrier) does not involve the uplink radio frequency chain switching, an uplink transmission interruption is caused in the band (or on the carrier).

In addition, the terminal device further reports at least three bands to the access network device. To be specific, the terminal device sends indication information of the at least three bands to the access network device by using a message (for example, the first message). For descriptions of the indication information of the at least three bands, refer to the foregoing descriptions. Details are not described herein again.

In an optional implementation, each of the at least three bands corresponds to one first capability indication, each first capability indication indicates whether the corresponding band supports the first capability, and the first capability is that in the uplink radio frequency chain switching period, the terminal device supports causing no uplink transmission interruption in a band that does not involve the switching (or on a carrier that belongs to the band).

In an optional implementation, each of the at least three bands corresponds to one first capability indication, each band includes at least one carrier, each first capability indication indicates whether all carriers in the corresponding band support the first capability, and the first capability is that in the uplink radio frequency chain switching period, the terminal device supports causing no uplink transmission interruption in a band that does not involve the switching (or on a carrier that belongs to the band).

In an optional implementation, at least two of the at least three bands correspond to one first capability indication, each first capability indication indicates whether the at least two corresponding bands support the first capability, and the first capability is that in the uplink radio frequency chain switching period, the terminal device supports causing no uplink transmission interruption in a band that does not involve the switching (or on a carrier that belongs to the band).

Optionally, the at least three bands include at least one band group, and each band group includes at least one band. Each of the at least one band group corresponds to one first capability indication, each first capability indication indicates whether the corresponding band group supports the first capability, and the first capability is that in the uplink radio frequency chain switching period, the terminal device supports causing no uplink transmission interruption in a band that does not involve the switching (or on a carrier that belongs to the band).

In an optional implementation, each of the at least three bands includes at least one carrier, the first message includes one first capability indication, the first capability indication indicates whether each carrier in the at least three bands in the first message supports the first capability, and the first capability is that in the uplink radio frequency chain switching period, the terminal device supports causing no uplink transmission interruption on a carrier that does not involve the switching.

In an optional implementation, each of the at least three bands includes at least one carrier, each carrier in the first message corresponds to one first capability indication, each first capability indication indicates whether the corresponding carrier supports the first capability, and the first capability is that in the uplink radio frequency chain switching period, when the carrier does not involve the switching, the terminal device supports causing no uplink transmission interruption on the carrier.

In an optional implementation, the first capability indication in the first message corresponds to one carrier group, and the carrier group includes at least one carrier. Carriers in the carrier group belong to one of the at least three bands, or carriers in the carrier group belong to different bands in the at least three bands. The first capability indication indicates whether all carriers in the corresponding carrier group support the first capability, and the first capability is that in the uplink radio frequency chain switching period, when the carrier does not involve the switching, the terminal device supports causing no uplink transmission interruption on the carrier.

Specifically, the foregoing embodiment corresponding to FIG. 3 provides detailed examples, and specific examples are not listed one by one for explanation in this embodiment.

In this embodiment, the terminal device can report the first capability indication to the access network device. The first capability indication can indicate whether the terminal device causes an uplink transmission interruption in the band that does not involve the uplink radio frequency chain switching in the uplink radio frequency chain switching period, and the uplink radio frequency chain switching is supported between the band in which uplink switching is performed in the uplink radio frequency chain switching period and the band that does not involve the uplink radio frequency chain switching. In other words, the terminal device reports, to the access network device, both a band in which uplink radio frequency chain switching is being performed and a band that does not involve the uplink radio frequency chain switching exist in several bands that support the uplink radio frequency chain switching, and the first capability indication can indicate whether an uplink interruption is required in the band that does not involve the uplink radio frequency chain switching. When no uplink interruption is caused in the band that does not involve the uplink radio frequency chain switching, this helps avoid a waste of time-frequency resources.

In addition, in addition to the embodiment corresponding to FIG. 3 and the embodiment corresponding to FIG. 4, if the terminal device does not send the first capability indication to the access network device, the terminal device and the access network device may further determine, in a pre-agreed manner, whether an uplink transmission interruption is caused in the band that does not involve the uplink radio frequency chain switching in the uplink radio frequency chain switching period.

In a possible implementation, in an uplink radio frequency chain switching period on at least two carriers, the terminal device causes an uplink transmission interruption on the at least two carriers, and causes no uplink transmission interruption on at least one carrier that does not involve the uplink radio frequency chain switching. The at least two carriers and the at least one carrier that does not involve the uplink radio frequency chain switching belong to a second carrier set, and carriers in the second carrier set are carriers configured by an access network device for the uplink radio frequency chain switching.

In other words, the terminal device and the access network device may pre-agree that no uplink transmission interruption is caused in a band that does not involve the uplink radio frequency chain switching in the uplink radio frequency chain switching period.

In another possible implementation, in an uplink radio frequency chain switching period on at least two carriers, the terminal device causes an uplink transmission interruption on the at least two carriers, and causes an uplink transmission interruption on at least one carrier that does not involve uplink radio frequency chain switching. The at least two carriers and the at least one carrier that does not involve the uplink radio frequency chain switching belong to a second carrier set, and carriers in the second carrier set are carriers configured by the access network device for the uplink radio frequency chain switching.

In other words, the terminal device and the access network device may pre-agree that an uplink transmission interruption is caused in a band that does not involve the uplink radio frequency chain switching in the uplink radio frequency chain switching period.

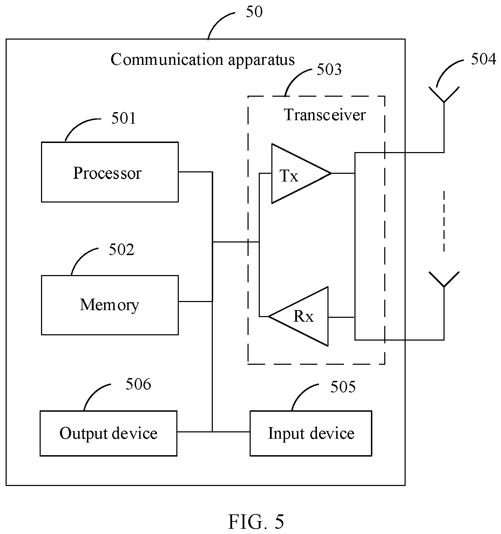

FIG. 5 is a schematic structural diagram of a communication apparatus 50 according to an embodiment. It should be understood that the terminal device in the method embodiment corresponding to FIG. 3 or FIG. 4 may be based on a structure of the communication apparatus 50 shown in FIG. 5 in this embodiment.

The communication apparatus 50 includes at least one processor 501, at least one memory 502, and at least one transceiver 503. The processor 501, the memory 502, and the transceiver 503 are connected to each other. Optionally, the communication apparatus 50 may further include an input device 505, an output device 506, and one or more antennas 504. The antenna 504 is connected to the transceiver 503, and the input device 505 and the output device 506 are connected to the processor 501.

In this embodiment, the memory 502 is mainly configured to store a software program and data. The memory 502 may exist independently, and is connected to the processor 501. Optionally, the memory 502 and the processor 501 may be integrated, for example, integrated into one or more chips. The memory 502 can store program code for executing the technical solutions of embodiments of this application, and the processor 501 controls the execution. Various types of executed computer program code may also be considered as drivers of the processor 501. It should be understood that FIG. 5 in this embodiment shows only one memory and one processor. However, during actual application, the communication apparatus 50 may include a plurality of processors or a plurality of memories. This is not specifically limited herein. In addition, the memory 502 may also be referred to as a storage medium, a storage device, or the like. The memory 502 may be a storage element (that is, an on-chip storage element) located on a same chip as the processor, or an independent storage element. This is not limited in this embodiment of this application.

In this embodiment, the transceiver 503 may be configured to support receiving or sending of a radio frequency signal between the communication apparatus 50 and an access network device, and the transceiver 503 may be connected to the antenna 504. The transceiver 503 includes a transmitter Tx and a receiver Rx. Specifically, the one or more antennas 504 may receive a radio frequency signal. The receiver Rx in the transceiver 503 is configured to: receive the radio frequency signal from the antenna 504, convert the radio frequency signal into a digital baseband signal or a digital intermediate frequency signal, and provide the digital baseband signal or the digital intermediate frequency signal for the processor 501, to enable the processor 501 to perform further processing, for example, demodulation processing and decoding processing, on the digital baseband signal or the digital intermediate frequency signal. In addition, the transmitter Tx in the transceiver 503 is further configured to: receive a modulated digital baseband signal or a modulated digital intermediate frequency signal from the processor 501, convert the modulated digital baseband signal or the modulated digital intermediate frequency signal into a radio frequency signal, and transmit the radio frequency signal through the one or more antennas 504. Specifically, the receiver Rx may selectively perform one-level or multi-level frequency down-mixing processing and analog-to-digital conversion processing on the radio frequency signal to obtain a digital baseband signal or a digital intermediate frequency signal, and a sequence of the frequency down-mixing and the analog-to-digital conversion processing is adjustable. The transmitter Tx may selectively perform one-level or multi-level frequency up-mixing processing and digital-to-analog conversion processing on a modulated digital baseband signal or a modulated digital intermediate frequency signal to obtain a radio frequency signal, and a sequence of the frequency up-mixing processing and the digital-to-analog conversion processing is adjustable. The digital baseband signal and the digital intermediate frequency signal may be collectively referred to as digital signals.

It should be understood that the transceiver 503 may also be referred to as a transceiver unit, a transceiver, a transceiver apparatus, or the like. Optionally, a component that is in the transceiver unit and that is configured to implement a receiving function may be considered as a receiving unit. A component that is in the transceiver unit and that is configured to implement a sending function may be considered as a sending unit. That is, the transceiver unit includes the receiving unit and the sending unit. The receiving unit may also be referred to as a receiver, an input port, a receiving circuit, or the like. The sending unit may be referred to as a transmitter, a transmitting circuit, or the like.

Optionally, the transmitter Tx is also referred to as a transmission channel or a radio frequency (radio frequency, RF) transmission channel. In this application, the transmission channel may operate in the following manner, but is not limited to the following manner: The transmission channel may be used to receive a baseband signal from a baseband chip, perform radio frequency processing (such as up-conversion, amplification, and filtering) on the baseband signal to obtain a radio frequency signal, and finally radiate the radio frequency signal to space through the antenna 504. Specifically, the transmission channel may include electronic components such as an antenna switch, an antenna tuner, a low noise amplifier (low noise amplifier, LNA), a power amplifier (power amplifier, PA), a frequency mixer (mixer), a local oscillator (local oscillator, LO), and a filter (filter). These electronic components may be integrated into one or more chips according to a requirement. The antenna 504 may also be sometimes considered as a part of the transmission channel.

In addition, the antenna 504 further includes an antenna port (port). The antenna port is a logical concept. During actual signal transmission, the antenna port is mapped to a corresponding transmission channel. Currently, when scheduling the terminal device to transmit data, the access network device may explicitly indicate a port number of an antenna port used for data transmission.

The processor 501 may be a baseband processor, or may be a central processing unit (central processing unit, CPU). The baseband processor and the CPU may be integrated together or separated from each other. The processor 501 may be configured to implement various functions for the terminal device, for example, configured to process a communication protocol and communication data, or configured to: control an entire terminal device, execute a software program, and process data of the software program, or configured to assist in completing a computing processing task, for example, graphics and image processing or audio processing. Alternatively, the processor 501 is configured to implement one or more of the foregoing functions.

In addition, the output device 506 communicates with the processor 501, and may display information in a plurality of manners. This is not specifically limited herein.

Specifically, in the communication apparatus 50, the transceiver 503 sends a first capability indication to the access network device through the antenna 504. The first capability indication indicates that the terminal device causes no uplink transmission interruption in a band that does not involve uplink radio frequency chain switching in an uplink radio frequency chain switching period, and the uplink radio frequency chain switching is supported between a band in which uplink switching is performed in the uplink radio frequency chain switching period and the band that does not involve the uplink radio frequency chain switching.

In an optional implementation, in the communication apparatus 50, the transceiver 503 sends a first message to the access network device through the antenna 504. The first message includes the first capability indication.

In an optional implementation, in the communication apparatus 50, the transceiver 503 sends indication information of at least three bands to the access network device through the antenna 504. The at least three bands support the uplink radio frequency chain switching. Optionally, the indication information of the at least three bands is carried in the first message.

Optionally, the first message further includes indication information of an initial band combination, the initial band combination includes the at least three bands, and the initial band combination indicates that the band in the initial band combination supports the uplink radio frequency chain switching.

Optionally, the at least three bands may form at least three band pairs. Each band pair includes two of the at least three bands, each band pair indicates that the two bands in the band pair support the switching, and a same band exists between any two of the at least three band pairs. Optionally, indication information of the at least three band pairs is carried in the first message.

In an optional implementation, in the communication apparatus 50, the transceiver 503 sends indication information of a first band combination to the access network device through the antenna 504. The first capability indication corresponds to the first band combination, the first band combination is a subset of a set including the at least three bands, and the first capability indication the terminal device causes no uplink transmission interruption in a band in the first band combination in the uplink radio frequency chain switching period when the band in the first band combination does not involve the uplink radio frequency chain switching. Optionally, the indication information of the first band combination is carried in the first message.

In an optional implementation, in the communication apparatus 50, the transceiver 503 sends indication information of a first band combination and indication information of a second band combination to the access network device through the antenna 504. The second band combination is a subset of a set including the at least three bands. The first capability indication corresponds to a third band, the third band belongs to the first band combination, and the third band does not belong to the second band combination. The first capability indication indicates that the terminal device causes no uplink transmission interruption in the third band when the terminal device performs uplink radio frequency chain switching in a band in the second band combination; or the first capability indication indicates that no uplink transmission interruption is caused in the third band when at least one band for the uplink radio frequency chain switching belongs to the second band combination. Optionally, the indication information of the first band combination and the indication information of the second band combination are carried in the first message.

In an optional implementation, in the communication apparatus 50, the transceiver 503 sends indication information of a first carrier set to the access network device through the antenna 504. A carrier in the first carrier set belongs to a band in the at least three bands. The first capability indication corresponds to the first carrier set, and the first capability indication indicates that a carrier in the first carrier set supports causing no uplink transmission interruption in the uplink radio frequency chain switching period when the carrier in the first carrier set does not involve the uplink radio frequency chain switching. Optionally, the indication information of the first carrier set is carried in the first message.

In an optional implementation, in the communication apparatus 50, in the uplink radio frequency chain switching period, the processor 501 causes an uplink transmission interruption in a band in which uplink radio frequency chain switching is performed and a band in a fourth band combination. The band in the fourth band combination is a band that is in the at least three bands and that does not belong to the first band combination.

For other parts, refer to the method of the terminal device in the foregoing embodiment. Details are not described herein again.

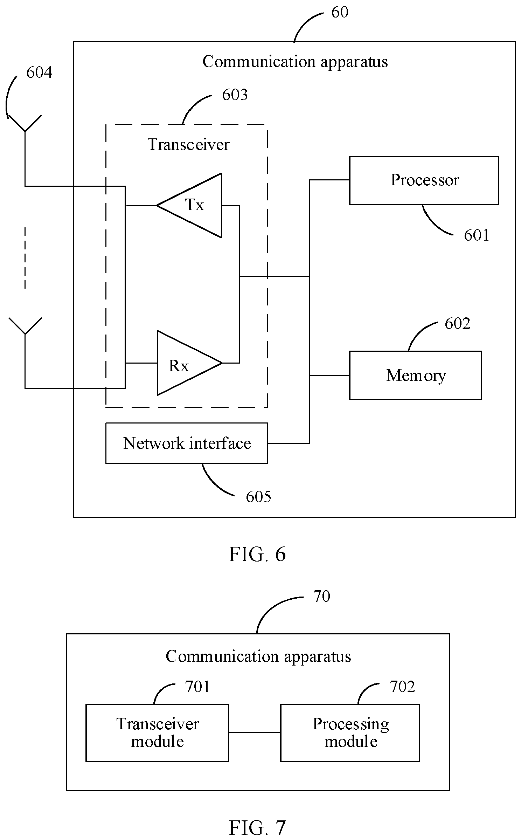

FIG. 6 is a schematic structural diagram of another communication apparatus 60 according to an embodiment. It should be understood that the access network device in the method embodiment corresponding to FIG. 3 or FIG. 4 may be based on a structure of the communication apparatus 60 shown in FIG. 6 in this embodiment. It should be further understood that when an access network device or a base station of a subsequently evolved standard performs the method in embodiments of this application, the access network device or the base station of the subsequently evolved standard may also use the structure of the communication apparatus 60 shown in FIG. 6 in this embodiment.

The communication apparatus 60 includes at least one processor 601, at least one memory 602, at least one transceiver 603, at least one network interface 605, and one or more antennas 604. The processor 601, the memory 602, the transceiver 603, and the network interface 605 are connected by using a connection apparatus, and the antenna 604 is connected to the transceiver 603. The connection apparatus may include various types of interfaces, transmission cables, buses, or the like. This is not limited in this embodiment.

The network interface 605 is configured to enable the communication apparatus 60 to connect to another communication apparatus through a communication link. Specifically, the network interface 605 may include a network interface between the communication apparatus 60 and a core network element, for example, an S 1 interface. Alternatively, the network interface 605 may include a network interface between the communication apparatus 60 and another network device (for example, another access network device or a core network element), for example, an X2 interface or an Xn interface.

For the transceiver 603, the memory 602, and the antenna 604, refer to related descriptions of the transceiver 603, the memory 602, and the antenna 604 in the embodiment corresponding to FIG. 6. Details are not described herein again.

In addition, the processor 601 is mainly configured to process a communication protocol and communication data, control an entire network device, execute a software program, and process data of the software program, for example, configured to support the communication apparatus 60 in performing an action described in the foregoing embodiment. The communication apparatus 60 may include a baseband processor and a central processing unit. The baseband processor is mainly configured to process a communication protocol and communication data. The central processing unit is mainly configured to control the entire communication apparatus 60, execute a software program, and process data of the software program. Functions of the baseband processor and the central processing unit may be integrated into the processor 601 in FIG. 6. Persons skilled in the art may understand that the baseband processor and the central processing unit may alternatively be processors independent of each other, and are interconnected by using a technology such as a bus. Persons skilled in the art may understand that the communication apparatus 60 may include a plurality of baseband processors to adapt to different network standards, the communication apparatus 60 may include a plurality of central processing units to enhance a processing capability of the communication apparatus 60, and components in the communication apparatus 60 may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program. The processor executes the software program to implement a baseband processing function.

Specifically, in the communication apparatus 60, the transceiver 603 receives a first message from a terminal device through the antenna 604. The first message includes a first capability indication, the first capability indication indicates that the terminal device causes no uplink transmission interruption in a band that does not involve uplink radio frequency chain switching in an uplink radio frequency chain switching period, and the uplink radio frequency chain switching is supported between a band in which uplink switching is performed in the uplink radio frequency chain switching period and the band that does not involve the uplink radio frequency chain switching.

In an optional implementation, the first message further includes indication information of a first band combination, the first capability indication corresponds to the first band combination, the first band combination is a subset of a set including at least three bands, and the first capability indication the terminal device causes no uplink transmission interruption in a band in the first band combination in the uplink radio frequency chain switching period when the band in the first band combination does not involve the uplink radio frequency chain switching.

In an optional implementation, the first message further includes indication information of a second band combination, and the second band combination is a subset of a set including at least three bands; and the first capability indication corresponds to a third band, the third band belongs to the first band combination, the third band does not belong to the second band combination, and the first capability indication indicates that the terminal device causes no uplink transmission interruption in the third band when the terminal device performs uplink radio frequency chain switching in a band in the second band combination.

In an optional implementation, the first message further includes indication information of a second band combination, and the second band combination is a subset of a set including at least three bands; and the first capability indication corresponds to a third band, the third band belongs to the first band combination, the third band does not belong to the second band combination, and the first capability indication indicates that no uplink transmission interruption is caused in the third band when at least one band in which uplink radio frequency chain switching is performed belongs to the second band combination.

In an optional implementation, the first message further includes indication information of a first carrier set, and a carrier in the first carrier set belongs to a band in at least three bands; and the first capability indication corresponds to the first carrier set, and the first capability indication indicates that a carrier in the first carrier set supports causing no uplink transmission interruption in the uplink radio frequency chain switching period when the carrier in the first carrier set does not involve the uplink radio frequency chain switching.

In addition, the processor 601 is configured to schedule a resource, such as a band or a carrier, reported by the terminal device.

For other parts, refer to the method of the access network device in the foregoing embodiment. Details are not described herein again.

As shown in FIG. 7, this application further provides another communication apparatus 70. The communication apparatus 70 may be a terminal device or a chip in the terminal device. The communication apparatus 70 includes a transceiver module 701 and a processing module 702.

The transceiver module 701 sends a first capability indication to an access network device. The first capability indication indicates that the terminal device causes no uplink transmission interruption in a band that does not involve uplink radio frequency chain switching in an uplink radio frequency chain switching period, and the uplink radio frequency chain switching is supported between a band in which uplink switching is performed in the uplink radio frequency chain switching period and the band that does not involve the uplink radio frequency chain switching.

In an optional implementation, the transceiver module 701 sends a first message to the access network device. The first message includes the first capability indication.

In an optional implementation, the transceiver module 701 sends indication information of at least three bands to the access network device. The at least three bands support the uplink radio frequency chain switching. Optionally, the at least three bands are located in the first message.

In an optional implementation, the transceiver module 701 sends indication information of a first band combination to the access network device. The first capability indication corresponds to the first band combination, the first band combination is a subset of a set including the at least three bands, and the first capability indication the terminal device causes no uplink transmission interruption in a band in the first band combination in the uplink radio frequency chain switching period when the band in the first band combination does not involve the uplink radio frequency chain switching. Optionally, the indication information of the first band combination is carried in the first message.

In an optional implementation, the transceiver module 701 sends indication information of a first band combination and indication information of a second band combination to the access network device. The second band combination is a subset of a set including the at least three bands. The first capability indication corresponds to a third band, the third band belongs to the first band combination, and the third band does not belong to the second band combination. The first capability indication indicates that the terminal device causes no uplink transmission interruption in the third band when the terminal device performs uplink radio frequency chain switching in a band in the second band combination; or the first capability indication indicates that no uplink transmission interruption is caused in the third band when at least one band for the uplink radio frequency chain switching belongs to the second band combination. Optionally, the indication information of the first band combination and the indication information of the second band combination are carried in the first message.

In an optional implementation, the transceiver module 701 sends indication information of a first carrier set to the access network device. A carrier in the first carrier set belongs to a band in the at least three bands. The first capability indication corresponds to the first carrier set, and the first capability indication indicates that a carrier in the first carrier set supports causing no uplink transmission interruption in the uplink radio frequency chain switching period when the carrier in the first carrier set does not involve the uplink radio frequency chain switching. Optionally, the indication information of the first carrier set is carried in the first message.

In an optional implementation, the processing module 702 causes an uplink transmission interruption in a band in which uplink radio frequency chain switching is performed and a band in a fourth band combination. The band in the fourth band combination is a band that is in the at least three bands and that does not belong to the first band combination.

For other parts, refer to the method of the terminal device in the foregoing embodiment. Details are not described herein again.

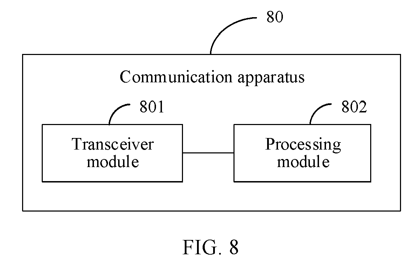

As shown in FIG. 8, this application further provides another communication apparatus 80. The communication apparatus 80 may be an access network device or a chip in the access network device. The communication apparatus 80 includes a transceiver module 801 and a processing module 802.

The transceiver module 801 receives a first message from a terminal device. The first message includes a first capability indication, the first capability indication indicates that the terminal device causes no uplink transmission interruption in a band that does not involve uplink radio frequency chain switching in an uplink radio frequency chain switching period, and the uplink radio frequency chain switching is supported between a band in which uplink switching is performed in the uplink radio frequency chain switching period and the band that does not involve the uplink radio frequency chain switching.

In an optional implementation, the first message further includes indication information of a first band combination, the first capability indication corresponds to the first band combination, the first band combination is a subset of a set including the at least three bands, and the first capability indication the terminal device causes no uplink transmission interruption in a band in the first band combination in the uplink radio frequency chain switching period when the band in the first band combination does not involve the uplink radio frequency chain switching.

In an optional implementation, the first message further includes indication information of a second band combination, and the second band combination is a subset of a set including the at least three bands; and the first capability indication corresponds to a third band, the third band belongs to the first band combination, the third band does not belong to the second band combination, and the first capability indication indicates that the terminal device causes no uplink transmission interruption in the third band when the terminal device performs uplink radio frequency chain switching in a band in the second band combination.

In an optional implementation, the first message further includes indication information of a second band combination, and the second band combination is a subset of a set including the at least three bands; and the first capability indication corresponds to a third band, the third band belongs to the first band combination, the third band does not belong to the second band combination, and the first capability indication indicates that no uplink transmission interruption is caused in the third band when at least one band in which uplink radio frequency chain switching is performed belongs to the second band combination.

In an optional implementation, the first message further includes indication information of a first carrier set, and a carrier in the first carrier set belongs to a band in the at least three bands; and the first capability indication corresponds to the first carrier set, and the first capability indication indicates that a carrier in the first carrier set supports causing no uplink transmission interruption in the uplink radio frequency chain switching period when the carrier in the first carrier set does not involve the uplink radio frequency chain switching.

In addition, the processing module 802 is configured to schedule a resource, such as a band or a carrier, reported by the terminal device.

For other parts, refer to the method of the access network device in the foregoing embodiment. Details are not described herein again.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware in the processor. To avoid repetition, details are not described herein again. It should be further understood that, "first", "second", "third", "fourth", and various numbers in this specification are merely used for differentiation for ease of description, and are not intended to limit the scope of embodiments of this application.

In addition, this application provides a computer program product. The computer program product includes one or more computer instructions. When the computer program instructions are loaded and executed on a computer, the procedures or functions according to embodiments of this application are all or partially generated. For example, the method related to the access network device in FIG. 3 or FIG. 4 is implemented. For another example, the method related to the terminal device in FIG. 3 or FIG. 4 is implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

In addition, this application further provides a computer-readable storage medium. The storage medium stores a computer program, and the computer program is executed by a processor to implement the method related to the terminal device in FIG. 3 or FIG. 4.

In addition, this application further provides a computer-readable storage medium. The storage medium stores a computer program, and the computer program is executed by a processor to implement the method related to the access network device in FIG. 3 or FIG. 4.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

The foregoing embodiments are merely intended to describe the technical solutions of this application, but not intended to limit the technical solutions of this application. Although this application is described in detail with reference to the foregoing embodiments, persons of ordinary skill in the art should understand that they may still make modifications to the technical solutions recorded in the foregoing embodiments or make equivalent replacements to some technical features thereof, and such modifications or replacements do not cause the essence of corresponding technical solutions to depart from the spirit and scope of the technical solutions of embodiments of this application.

## Claims

1. A communication method, comprising:
sending, by a terminal device, a first message to an access network device, wherein the first message comprises a first capability indication, the first capability indication indicates that the terminal device causes no uplink transmission interruption in a band that does not involve uplink radio frequency chain switching in an uplink radio frequency chain switching period, and the uplink radio frequency chain switching is supported between a band in which uplink switching is performed in the uplink radio frequency chain switching period and the band that does not involve the uplink radio frequency chain switching.

2. The method according to claim 1, wherein the first message further comprises indication information of at least three bands, and the at least three bands support the uplink radio frequency chain switching.

3. The method according to claim 2, wherein the first message further comprises indication information of a first band combination, the first capability indication corresponds to the first band combination, the first band combination is a subset of a set comprising the at least three bands, and the first capability indication indicates that the terminal device causes no uplink transmission interruption in a band in the first band combination in the uplink radio frequency chain switching period when the band in the first band combination does not involve the uplink radio frequency chain switching.

4. The method according to claim 3, wherein the first message further comprises indication information of a second band combination, and the second band combination is a subset of a set comprising the at least three bands; and
the first capability indication corresponds to a third band, the third band belongs to the first band combination, the third band does not belong to the second band combination, and the first capability indication indicates that the terminal device causes no uplink transmission interruption in the third band when the terminal device performs uplink radio frequency chain switching in a band in the second band combination.

5. The method according to claim 3, wherein the first message further comprises indication information of a second band combination, and the second band combination is a subset of a set comprising the at least three bands; and
the first capability indication corresponds to a third band, the third band belongs to the first band combination, the third band does not belong to the second band combination, and the first capability indication indicates that no uplink transmission interruption is caused in the third band when at least one band in which uplink radio frequency chain switching is performed belongs to the second band combination.

6. The method according to claim 2, wherein the first message further comprises indication information of a first carrier set, and a carrier in the first carrier set belongs to a band in the at least three bands; and
the first capability indication corresponds to the first carrier set, and the first capability indication indicates that a carrier in the first carrier set supports causing no uplink transmission interruption in the uplink radio frequency chain switching period when the carrier in the first carrier set does not involve the uplink radio frequency chain switching.

7. The method according to claim 3, wherein after the sending, by a terminal device, a first message to an access network device, the method further comprises:
in the uplink radio frequency chain switching period, causing, by the terminal device, an uplink transmission interruption in a band in which uplink radio frequency chain switching is performed and a band in a fourth band combination, wherein the band in the fourth band combination is a band that is in the at least three bands and that does not belong to the first band combination.

8. A communication method, comprising:
in an uplink radio frequency chain switching period on at least two carriers, causing, by a terminal device, an uplink transmission interruption on the at least two carriers, and causing no uplink transmission interruption on at least one carrier that does not involve uplink radio frequency chain switching, wherein the at least two carriers and the at least one carrier that does not involve the uplink radio frequency chain switching belong to a second carrier set, and carriers in the second carrier set are carriers configured by an access network device for the uplink radio frequency chain switching.

9. A communication method, comprising:
receiving, by an access network device, a first message from a terminal device, wherein the first message comprises a first capability indication, the first capability indication indicates that the terminal device causes no uplink transmission interruption in a band that does not involve uplink radio frequency chain switching in an uplink radio frequency chain switching period, and the uplink radio frequency chain switching is supported between a band in which uplink switching is performed in the uplink radio frequency chain switching period and the band that does not involve the uplink radio frequency chain switching.

10. The method according to claim 9, wherein the first message further comprises indication information of at least three bands, and the at least three bands support the uplink radio frequency chain switching.

11. The method according to claim 10, wherein the first message further comprises indication information of a first band combination, the first capability indication corresponds to the first band combination, the first band combination is a subset of a set comprising the at least three bands, and the first capability indication the terminal device causes no uplink transmission interruption in a band in the first band combination in the uplink radio frequency chain switching period when the band in the first band combination does not involve the uplink radio frequency chain switching.

12. The method according to claim 11, wherein the first message further comprises indication information of a second band combination, and the second band combination is a subset of a set comprising the at least three bands; and
the first capability indication corresponds to a third band, the third band belongs to the first band combination, the third band does not belong to the second band combination, and the first capability indication indicates that the terminal device causes no uplink transmission interruption in the third band when the terminal device performs uplink radio frequency chain switching in a band in the second band combination.

13. The method according to claim 12, wherein the first message further comprises indication information of a second band combination, and the second band combination is a subset of a set comprising the at least three bands; and
the first capability indication corresponds to a third band, the third band belongs to the first band combination, the third band does not belong to the second band combination, and the first capability indication indicates that no uplink transmission interruption is caused in the third band when at least one band in which uplink radio frequency chain switching is performed belongs to the second band combination.

14. The method according to claim 12, wherein the first message further comprises indication information of a first carrier set, and a carrier in the first carrier set belongs to a band in the at least three bands; and
the first capability indication corresponds to the first carrier set, and the first capability indication indicates that a carrier in the first carrier set supports causing no uplink transmission interruption in the uplink radio frequency chain switching period when the carrier in the first carrier set does not involve the uplink radio frequency chain switching.

15. A communication apparatus, comprising:
a transceiver module, configured to send a first message to an access network device, wherein the first message comprises a first capability indication, the first capability indication indicates that the terminal device causes no uplink transmission interruption in a band that does not involve uplink radio frequency chain switching in an uplink radio frequency chain switching period, and the uplink radio frequency chain switching is supported between a band in which uplink switching is performed in the uplink radio frequency chain switching period and the band that does not involve the uplink radio frequency chain switching.

16. The communication apparatus according to claim 15, wherein the first message further comprises indication information of at least three bands, and the at least three bands support the uplink radio frequency chain switching.

17. The communication apparatus according to claim 16, wherein the first message further comprises indication information of a first band combination, the first capability indication corresponds to the first band combination, the first band combination is a subset of a set comprising the at least three bands, and the first capability indication the terminal device causes no uplink transmission interruption in a band in the first band combination in the uplink radio frequency chain switching period when the band in the first band combination does not involve the uplink radio frequency chain switching.

18. The communication apparatus according to claim 17, wherein the first message further comprises indication information of a second band combination, and the second band combination is a subset of a set comprising the at least three bands; and
the first capability indication corresponds to a third band, the third band belongs to the first band combination, the third band does not belong to the second band combination, and the first capability indication indicates that the terminal device causes no uplink transmission interruption in the third band when the terminal device performs uplink radio frequency chain switching in a band in the second band combination.

19. The communication apparatus according to claim 17, wherein the first message further comprises indication information of a second band combination, and the second band combination is a subset of a set comprising the at least three bands; and
the first capability indication corresponds to a third band, the third band belongs to the first band combination, the third band does not belong to the second band combination, and the first capability indication indicates that no uplink transmission interruption is caused in the third band when at least one band in which uplink radio frequency chain switching is performed belongs to the second band combination.

20. The communication apparatus according to claim 16, wherein the first message further comprises indication information of a first carrier set, and a carrier in the first carrier set belongs to a band in the at least three bands; and
the first capability indication corresponds to the first carrier set, and the first capability indication indicates that a carrier in the first carrier set supports causing no uplink transmission interruption in the uplink radio frequency chain switching period when the carrier in the first carrier set does not involve the uplink radio frequency chain switching.

21. The communication apparatus according to claim 17, wherein the communication apparatus further comprises:
a processing module, configured to: in the uplink radio frequency chain switching period, cause an uplink transmission interruption in a band in which uplink radio frequency chain switching is performed and a band in a fourth band combination, wherein the band in the fourth band combination is a band that is in the at least three bands and that does not belong to the first band combination.

22. A communication apparatus, comprising:
a processing module, configured to: in an uplink radio frequency chain switching period on at least two carriers, cause an uplink transmission interruption on the at least two carriers, and cause no uplink transmission interruption on at least one carrier that does not involve uplink radio frequency chain switching, wherein the at least two carriers and the at least one carrier that does not involve the uplink radio frequency chain switching belong to a second carrier set, and carriers in the second carrier set are carriers configured by an access network device for the uplink radio frequency chain switching.

23. A communication apparatus, comprising:
a transceiver module, configured to receive a first message from a terminal device, wherein the first message comprises a first capability indication, the first capability indication indicates that the terminal device causes no uplink transmission interruption in a band that does not involve uplink radio frequency chain switching in an uplink radio frequency chain switching period, and the uplink radio frequency chain switching is supported between a band in which uplink switching is performed in the uplink radio frequency chain switching period and the band that does not involve the uplink radio frequency chain switching.

24. The communication apparatus according to claim 23, wherein the first message further comprises indication information of at least three bands, and the at least three bands support the uplink radio frequency chain switching.

25. The communication apparatus according to claim 24, wherein the first message further comprises indication information of a first band combination, the first capability indication corresponds to the first band combination, the first band combination is a subset of a set comprising the at least three bands, and the first capability indication the terminal device causes no uplink transmission interruption in a band in the first band combination in the uplink radio frequency chain switching period when the band in the first band combination does not involve the uplink radio frequency chain switching.

26. The communication apparatus according to claim 25, wherein the first message further comprises indication information of a second band combination, and the second band combination is a subset of a set comprising the at least three bands; and
the first capability indication corresponds to a third band, the third band belongs to the first band combination, the third band does not belong to the second band combination, and the first capability indication indicates that the terminal device causes no uplink transmission interruption in the third band when the terminal device performs uplink radio frequency chain switching in a band in the second band combination.

27. The communication apparatus according to claim 26, wherein the first message further comprises indication information of a second band combination, and the second band combination is a subset of a set comprising the at least three bands; and
the first capability indication corresponds to a third band, the third band belongs to the first band combination, the third band does not belong to the second band combination, and the first capability indication indicates that no uplink transmission interruption is caused in the third band when at least one band in which uplink radio frequency chain switching is performed belongs to the second band combination.

28. The communication apparatus according to claim 26, wherein the first message further comprises indication information of a first carrier set, and a carrier in the first carrier set belongs to a band in the at least three bands; and
the first capability indication corresponds to the first carrier set, and the first capability indication indicates that a carrier in the first carrier set supports causing no uplink transmission interruption in the uplink radio frequency chain switching period when the carrier in the first carrier set does not involve the uplink radio frequency chain switching.

29. A communication apparatus, comprising a processor and a memory, wherein
the memory stores a computer program; and
the processor invokes the computer program in the memory, to enable the communication apparatus to perform the method according to any one of claims 1 to 8.

30. A communication apparatus, comprising a processor and a memory, wherein
the memory stores a computer program; and
the processor invokes the computer program in the memory, to enable the communication apparatus to perform the method according to any one of claims 9 to 14.

31. A communication system, comprising:
the communication apparatus according to any one of claims 15 to 21, and the communication apparatus according to any one of claims 22 to 28.

32. A computer-readable storage medium, storing instructions, wherein when the instructions are run on a computer, the computer is enabled to perform the method according to any one of claims 1 to 8.

33. A computer-readable storage medium, storing instructions, wherein when the instructions are run on a computer, the computer is enabled to perform the method according to any one of claims 9 to 14.

34. A computer program product comprising instructions, wherein when the computer program product runs on a computer, the computer is enabled to perform the method according to any one of claims 1 to 8 or claims 9 to 14.
